# EUROPEAN PATENT APPLICATION

(11) **EP 4 763 374 A1**
(43) Date of publication of application: **24.06.2026**
(21) Application number: 25172964.6
(22) Date of filing: 28.04.2025
(51) Int. Cl.: B22D 23/06, B22F 10/22, B22F 10/25, B33Y 10/00, B33Y 30/00, B33Y 70/00

(54) **ADDITIVE METAL CASTING SYSTEM AND METHOD**

(30) Priority: 17.12.2024 US 202463734840 P
(71) Applicant: Magnus Metal Ltd., 9782000 Revadim (IL)
(72) Inventor: Svetlizky, Evgni David, 5956424 Bat Yam (IL); Tevet, Ofer, 4641745 Herzelia (IL); Lavi, Gil, 7045868 Ness Ziona (IL); Weisz, Emil, 7174266 Modi'in-Maccabim-Reut (IL)
(74) Representative: Zimmermann & Partner Patentanwälte mbB

(57) **Abstract**

There is provided an additive metal casting system and method for casting a metallic object by producing a stack of production layers having mold regions and object regions, the mold regions constituting a mold-in-progress and the object regions constituting a cast-in-progress held within the mold-in-progress. The additive metal casting system includes a metal processing system including: a surface melter configured for melting a first volume of previously-solidified metal in the cast-in-progress; a metal depositor configured for dropping a second volume of molten metal into said first volume; wherein said first volume and said second volume accumulate into a melt zone of at least a minimum volume of molten material required for at least one cast-property modification process; and a powder introduction unit for delivering an allocated amount of at least one cast-property modifying powder into said melt zone. For molten material of a ferrous alloy, the minimum volume is at least 2cc.

## Description

This application claims priority from US provisional patent application 63/734,840, filed December 17, 2024, which is incorporated herein by reference.

### FIELD OF THE INVENTION

The present disclosure relates to additive metal manufacturing generally and specifically to additive metal casting employing molten metal deposition and provision of inoculants and additives.

### BACKGROUND

Inoculants and additives are two types of materials used in metal casting to modify the properties of the molten metal and improve the final quality of the castings.

Inoculants are materials that are mainly used in iron casting and added to the molten metal to modify the size, shape, and distribution of the graphite in cast iron. After an inoculant is added to the melt, it dissolves in the molten metal and reacts with it to modify the microstructure of the resulting casting. Inoculants are typically made of materials that contain elements like silicon, aluminum, barium, strontium, cerium, and others that react with the molten metal to produce nucleation sites for graphite formation. Inoculants are added to the melt just before pouring or during pouring. Proper graphite inoculation can improve the mechanical properties of the cast, such as strength and toughness, and can also reduce the occurrence of defects, such as shrinkage and porosity.

Additives are materials that are added to the molten metal to change its chemical composition or physical properties. Alloying elements such as manganese, chromium, and nickel are added to the molten metal to improve its strength, corrosion resistance, or other specific properties.

In traditional casting, molten metal deposition involves a single-shot discharge of molten metal into a fully-fabricated mold, preferably as fast as possible. Molten metal flow is often designed to overcome flow obstacles associated with holes, windows, and additional metal cast features. Inoculants and additives are added to the molten metal before or during pouring.

US Patent no. 5,755,271 discloses a late inoculation method, wherein the additives are placed in the passageway of the molten metal between the pouring cap and mold. US Patent Application no. US20050189083A1 discloses a casting mold, and a method for its use to achieve in-mold modification of the casting metal. One or more chambers are located within the casting mold's runner system. Each chamber can contain metallurgical modifiers to adjust the chemical composition of the metal and improve the mechanical and physical properties of an article cast from the metal. One or more modifiers can be placed in the chamber(s) as the casting mold is assembled for use. As the melt is introduced to the casting mold, it passes through the chamber(s) and liquefies the modifier.

Several articles discuss metal additive manufacturing challenges:
Amit Bandyopadhyay, Kellen D. Traxel, Invited review article: Metal-additive manufacturing-Modeling strategies for application-optimized designs, Additive Manufacturing, Volume 22, 2018, Pages 758-774, ISSN 2214-8604;
David Svetlizky, Baolong Zheng, Tali Buta, Yizhang Zhou, Oz Golan, Uri Breiman, Rami Haj-Ali, Julie M. Schoenung, Enrique J. Lavernia, Noam Eliaz, Directed energy deposition of Al 5xxx alloy using Laser Engineered Net Shaping (LENS®), Materials & Design, Volume 192, 2020, 108763, ISSN 0264-1275;
Ahn, DG. Directed Energy Deposition (DED) Process: State of the Art. Int. J. of Precis. Eng. and Manuf.-Green Tech. 8, 703-742 (2021); and
Scott M. Thompson, Linkan Bian, Nima Shamsaei, Aref Yadollahi, An overview of Direct Laser Deposition for additive manufacturing; Part I: Transport phenomena, modeling and diagnostics, Additive Manufacturing, Volume 8, 2015, Pages 36-62, ISSN 2214-8604.

There is a need for additive metal casting methods and apparatus that facilitate the application of inoculants and additives during additive metal manufacturing and facilitate high-volume manufacturing at a reduced cost, increased throughput, and high metallurgical quality and consistency. These goals are met by embodiments of the present disclosure.

### GENERAL DESCRIPTION

According to an aspect of the present disclosure there is provided an additive metal casting system for casting a metallic object by producing a stack of production layers having mold regions and object regions, the mold regions constituting a mold-in-progress and the object regions constituting a cast-in-progress held within the mold-in-progress, the additive metal casting system comprising a metal processing system comprising: a surface melter configured for melting a first volume of previously-solidified metal in the cast-in-progress; a metal depositor configured for dropping a second volume of molten metal into the first volume; wherein the first volume and the second volume accumulate into a melt zone of at least a minimum volume of molten material required for at least one cast-property modification process; and a powder introduction unit for delivering an allocated amount of at least one cast-property modifying powder into the melt zone.

In some embodiments, the depositor comprises a metal rod rotatable around a provision axis of the integrated processing assembly and liftable up and down the provision axis; the surface melter comprises an induction heating unit having a coil shaped as a planar closed shape with an opening positioned concentrally to the provision axis; the inert environment unit is arranged on a periphery of the induction heating unit; and the power introduction unit has a feeding nozzle placed in proximity to the depositor, wherein molten metal free-falling from the depositor and the cast property modifying powder are provided to the melt zone through the opening.

In some embodiments, the allocated amount of the at least one cast property modifying powder is adjusted based on a predetermined fading rate of the cast property modifying powder during remelting.

In some embodiments, the depositor is configured to deposit the first volume of molten metal by releasing drops of molten metal in the form of (1) discrete drops, (2) continuous dripping or (3) continuous stream.

In some embodiments, the surface melter is further configured to provide heat to the melt zone after the first volume and the second volume accumulated to thereby impact a cooling rate of the melt zone from its melting temperature. In some embodiments, the surface melter is further configured to provide heat to the melt zone after the first volume and the second volume are accumulated to thereby maintain the melt zone in a melt state for a predefined duration.

In some embodiments, the powder introduction unit comprises a feeding nozzle configured for outputting the cast property modifying powder at a powder delivery angle and a standoff distance with respect to the melt zone, wherein the melt zone has a melt zone boundary, and wherein the powder delivery angle and a standoff distance are preselected to ensure that a spot size of a delivered dose of the allocated amount on the melt zone is within the melt zone boundary. In some embodiments, the powder nozzle is configured to maintain a powder spot size in a range of 2-50mm in diameter at a powder nozzle standoff distance of 12-150mm and a delivery angle in the range of 15-75°. In some embodiments, the powder introduction unit comprises a doser for dosing one or more doses of the at least one cast-property modifying powder. In some embodiments, the doser comprises: a powder reservoir for containing the cast-property modifying powder; a dosing mechanism configured to release a predetermined powder amount from the powder reservoir; a control volume for collecting the released powder amount prior to delivery into the melt zone; and a delivery system. In some embodiments, the dosing mechanism is configured to provide powder doses in the range of 1 microgram to 10 grams per dose. In some embodiments, the delivery system is a pressured gas delivery system and the doser further comprises a pressurized gas supply operatively connected to the control volume for propelling the allocated amount toward the melt zone. In some embodiments, the doser comprises multiple powder reservoirs, each containing a different cast-property modifying powder, wherein the dosing mechanism is configured to selectively release predetermined amounts from one or more of the powder reservoirs according to desired cast properties.

In some embodiments, the molten metal is a cast iron alloy and wherein the powder introduction unit is configured to deliver at least one powder material selected from (1) a group of grain refiners consisting of Titanium-based alloy, Zirconium-based alloy, Niobium-based alloy and/or (2) a group of inoculants consisting of Ferrosilicon-based inoculants, aluminum-based inoculants, Silicone carbide-based inoculants, Calcium-based inoculants, Strontium-based inoculant, Cerium-based inoculants, Sodium-based inoculants, Barium-based inoculants, Rare earth elements and/or (3) a group of Deoxidizers consisting of Aluminum, Silicon, Manganese, Calcium and/or (4) a group of Microstructure modifiers consisting of Magnesium, Cerium, Lanthanum, Yttrium and/or (5) a group of Carbide formers consisting of Vanadium, Titanium, Tellerium, Tungsten, Molybdenum.

In some embodiments, the additive metal casting system further comprises an inert environment unit, and wherein at least sections of at least the depositor, surface melter and powder introduction unit in proximity to the melt zone and the free-fall molten metal are maintained under inert environment. In some embodiments, the depositor, surface melter, powder introduction unit and inert environment unit are physically coupled and arranged as an integrated processing assembly movable across an upper surface of the cast-in-progress.

According to an aspect of the present disclosure, the additive metal casting system further comprises a controller operatively connected to the molten metal depositor, the surface melter and the powder introduction unit, the controller configured to: coordinate the molten metal depositor, the surface melter and the powder introduction unit to maintain the melt zone of a predetermined minimum volume in a molten state for at least a minimum duration sufficient for the allocated amount to cause a desired cast property modification process in the minimum volume of molten material. In some embodiments, the minimum duration is sufficient to enable complete dissolution and homogenization of the allocated amount of the cast property modifying powder in the melt zone. In some embodiments, the molten metal is composed of a ferrous alloy and wherein the minimum duration is at least 1 second.

In some embodiments, the controller is further configured to coordinate the depositor and the surface melter to drop molten metal into the melt zone while maintaining, upon drop release, the molten metal drops and the melt zone within a predetermined temperature differential not exceeding 100 degrees C.

In some embodiments, the controller is configured to implement: a continuous scanning mode wherein the metal processing assembly moves continuously along a processing path while maintaining a dynamic melt zone; and a discrete scanning mode wherein the metal processing assembly processes distinct working areas sequentially, wherein the controller selects the scanning mode based on at least one of part geometry, thermal requirements, or material properties.

In some embodiments, the additive metal casting system further comprises at least one temperature sensor for sensing at least a temperature of the melt zone, wherein the at least one temperature sensor is in data communication with the controller and wherein controller is further to coordinate the melter, metal depositor and powder introduction unit based on temperature data received from the at least one temperature sensor.

In some embodiments, the controller is further configured to: adjust scanning parameters in response to real-time thermal feedback; maintain minimum melt zone volumes specific to each scanning mode; coordinate the timing of powder introduction with the selected scanning mode; and manage thermal conditions at boundaries between adjacent working areas.

In some embodiments, the additive metal casting system further comprises a motion unit and wherein the controller is further to control the motion unit to provide relative movement of at least the depositor, the surface melter and the powder introduction unit across an upper surface of the cast-in-progress.

In some embodiments, the controller is further configured to determine (1) relative motion path for the depositor and surface melter across an upper surface of the cast-in-progress to thereby set an accumulation plan of the first volume and second volume, and (2) one or more powder introduction sites along the motion path, such that upon delivery of metallurgically modifying powder on one from among the powder introduction sites, at least the minimum volume has been accumulated in a respective melt zone.

In some embodiments, the controller is further operatively connected with a mold constructor, the controller is further configured to control the mold constructor to construct the mold in progress, the controller is further to coordinate the mold constructor to construct a current mold region of a current production layer on top of the cast-in-progress before processing a current object region of the current production layer.

In some embodiments, the controller is further configured to affect a cooling rate of the predetermined minimum volume when cooling from its melting temperature by setting one or more of (1) the first volume, (2) the second volume, (3) a deposition rate of the depositor, (4) a melting rate of the melter.

According to an aspect of the present disclosure, there is provided an additive metal casting system for casting a metallic object by producing a stack of production layers having mold regions and object regions, the mold regions constituting a mold-in-progress and the object regions constituting a cast-in-progress withheld in the mold-in-progress, the additive metal casting system comprising: a surface melter for melting a first volume of previously-solidified metal in the cast-in-progress; a metal depositor for dropping a second volume of molten metal into the first volume, wherein the first volume and the second volume accumulate into a melt zone of at least a minimum volume of molten material; a powder introduction unit for delivering an allocated amount of at least one cast-property modifying powder; an inert environment unit wherein the depositor, surface melter, powder introduction unit and inert environment unit are physically coupled and arranged as an integrated processing assembly movable across an upper surface of the cast-in-progress, wherein the depositor comprises a metal rod rotatable around a provision axis of the integrated processing assembly and liftable up and down the provision axis; the surface melter comprises an induction heating unit having a coil shaped as a planar closed shape with an opening positioned concentrally to the provision axis; the inert environment unit is arranged on a periphery of the induction heating unit; and the power introduction unit has an off-axis feeding nozzle placed in proximity to the depositor, wherein molten metal free-falling from the depositor and the at least one cast property modifying powder are provided to the melt zone through the opening; and a controller operatively connected to the molten metal depositor, the surface melter and the powder introduction unit, the controller configured to: coordinate the molten metal depositor, the surface melter and the powder introduction unit to maintain the melt zone of a minimum volume in a molten state for at least a minimum duration sufficient for the allocated amount to cause a desired cast property modification process in the minimum volume of molten material.

According to an aspect of the present disclosure there is provided an additive metal casting method for producing a metallic object by generating a stack of production layers having mold regions and object regions, the mold regions constituting a mold-in-progress and the object regions constituting a cast-in-progress withheld in the mold-in-progress, the method comprising, for each production layer: iteratively constructing a mold region of a current production layer on top of the stack of production layers; and processing an object region of the current production layer, wherein processing the object region of the current production layer comprises melting a first volume of previously-solidified metal in the cast-in-progress and dropping a second volume of molten metal into the first volume, wherein the first volume and the second volume accumulate into a melt zone of at least a minimum volume of molten material required for cast-property modification processes; and providing an allocated amount of at least one cast-property modifying powder to the melt zone; and maintaining the melt zone under inert environment while in the melt state.

In some embodiments, the additive metal casting method also comprises controlling the cast property-modification processes by one or more of (1) maintaining the minimum volume at a predetermined temperature within a specified range for a predetermined dwell time; (2) maintaining predetermined temperature gradients across the minimum volume.

In some embodiments, the additive metal casting method also comprises maintaining the melt zone under a melt state for a predetermined minimum duration, wherein the predetermined minimum duration is sufficient for the allocated amount to cause a desired cast property modification process in the minimum volume of molten material. In some embodiments, the predetermined minimum duration is sufficient to enable complete dissolution and homogenization of the allocated amount of the cast property modifying material in the melt zone.

In some embodiments, the additive metal casting method also comprises maintaining, upon drop release, the molten metal drops and the melt zone within a predetermined temperature differential not exceeding 100 degrees C.

In some embodiments, the additive metal casting method also comprises sensing a temperature of an upper surface of the cast-in-progress after metal processing of the current production layer and continuing to the next current production layer after the temperature of an upper surface of the cast-in-progress reached a predetermined value.

In some embodiments, the providing comprises outputting the cast property modifying powder at a powder delivery angle and a standoff distance with respect to the melt zone to ensure that a spot size of a provided dose of the allocated amount on the melt zone is within a melt zone boundary. In some embodiments, the method also comprises adjusting the allocated amount of the cast property modifying material based on a predetermined fading rate of the cast property modifying powder during remelting.

The dropping is in the form of (1) discrete drops, (2) continuous dripping or (3) continuous stream.

In some embodiments, processing the object region comprises implementing at least one of: a continuous scanning pattern wherein a working area dynamically moves with the processing assembly; or a discrete scanning pattern utilizing distinct, stationary working areas with defined boundaries, wherein each scanning pattern maintains the melt zone at or above the minimum volume. The continuous scanning pattern may comprise: progressively moving the melt zone with continuous overlap between adjacent working areas; synchronizing metal deposition, surface heating, and powder delivery during movement; maintaining the melt zone volume through coordinated thermal input and metal addition; and operating with at least one of constant travel speed or varying travel speed based on local thermal conditions. The discrete scanning pattern comprises: processing distinct working areas sequentially with defined boundaries; completing metal deposition, surface heating, and powder delivery in each working area before moving to an adjacent area; maintaining stationary melt zones for predetermined dwell times; and individually controlling process parameters for each working area.

According to an aspect of the present disclosure, there is provided a method of allocating an allocated amount of at least one cast-property modifying powder to a melt zone in a cast-in-progress while producing, by a metal processing assembly, an object region of a current production layer of a stack of production layers resulting in a final cast, the production layers having mold regions and object regions, the mold regions constituting a mold-in-progress and the object regions constituting a cast-in-progress held within the mold-in-progress, wherein the melt zone is composed of a first volume of melted previously-solidified metal in the cast-in-progress and a second volume of newly-added molten metal, the method comprising: determine the allocated amount of powder allocated to the current production layer based on at least the following data items: (1) the target properties desired in the final cast and at least one cast-property modifying powder to be used; (2) an object region volume; (3) the first volume of previously-solidified metal to be remelted; and (4) operating parameters of the metal processing assembly; and determining the number and location of powder introduction sites and the allocation of powder to the specific melt zones generated in the current production layer by optimizing the synchronization of: (1) a melt zone accumulation time; and (2) a powder introduction latency time. In some embodiments, at least one target property of the target properties of the at least one cast-property modifying powder comprises fading characteristics of the at least one cast-property modifying powder under reheating and remelting.

In some embodiments the operating parameters of the metal processing assembly comprises at least data on a processing path, metal processing assembly velocity, metal deposition rate, and melter current supply parameters. In some embodiments the operating parameters comprises at least a velocity of the metal processing assembly, a working distance of the metal processing assembly above the current production layer, metal deposition rate, surface heaters current supply, and source heaters current supply. In some embodiments, optimizing the synchronization comprises maintaining values of operational parameters of the metal processing assembly's within a permitted range.

In some embodiments, the cast property modifying powder comprises a chemically-modifying material and/or a metallurgically-modifying material. In some embodiments, the cast property modification processes comprise at least one of: (1) controlled graphite nucleation and growth achieving a predetermined graphite morphology and/or distribution; (2) controlled phase transformation producing a predetermined ratio of phases; (3) in-situ chemical composition modification achieving predetermined local material properties; (4) Grain refinement producing enhanced mechanical properties; (5) precipitation hardening; or (6) controlled solidification process producing predetermined dendrite arm spacing.

In some embodiments, the molten metal is cast iron alloy and wherein the at least one powder material is selected from (1) a group of grain refiners consisting of Titanium-based alloy, Zirconium-based alloy, Niobium-based alloy and/or (2) a group of inoculants consisting of Ferrosilicon-based inoculants, aluminum-based inoculants, Silicone carbide-based inoculants, Calcium-based inoculants, Strontium-based inoculant, Cerium-based inoculants, Sodium-based inoculants, Barium-based inoculants, Rare earth elements and/or (3) a group of Deoxidizers consisting of Aluminum, Silicon, Manganese, Calcium and/or (4) a group of Microstructure modifiers consisting of Magnesium, Cerium, Lanthanum, Yttrium and/or (5) a group of Carbide formers consisting of Vanadium, Titanium, Tellerium, Tungsten, Molybdenum.

In some embodiments, the molten metal is steel and/or steel alloy and wherein the at least one powder material is selected from (1) a group of grain refiners consisting of Aluminum-based alloy, Titanium-based alloy, Zirconium-based alloy, Niobium-based alloy and/or (2) a group of Deoxidizers consisting of Aluminum, Silicon, Manganese, Calcium and/or (3) a group of Microstructure modifiers consisting of Magnesium, Cerium, Lanthanum, Yttrium and/or (4) a group of Carbide formers consisting of Vanadium, Titanium, Tungsten, Molybdenum, Niobium and/or (5) a corrosion resistance modifiers consisting Chromium, Nickel, Molybdenum, Silicon, Aluminum, Titanium, Niobium, Phosphorus.

In some embodiments, the molten metal is composed of a ferrous alloy and wherein the minimum volume is at least of 2 cubic centimetres. In some embodiments, the molten metal is composed of a ferrous alloy and wherein the minimum volume, when cooling from its melting temperature, has a cooling rate of no more than 2°C/s (or 100k/s).

In some embodiments, the current object region height is in the range of 2mm to 50 mm. In some embodiments, the predefined cast-in-progress height for remelting is in the range of 0.5mm to 200 mm.

In some embodiments, for each production layer, the second volume of free-fall molten metal corresponds to a current object region height and a geometry of an inner wall of the mold region. In some embodiments, for each production layer, the first volume for remelting is calculated based on a predefined cast-in-progress height and a predetermined cross-sectional area defined by a geometry of an inner wall of the mold-in-progress corresponding to the predefined cast-in-progress height. In some embodiments, the predefined cast-in-progress height is equal to one of a group consisting of (1) half of the object region height; (2) the object region height; (3) double the object region height; (4) triple the object region height; and (5) quadruple of the object region height.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
**Figs. 1a-1b** are schematic diagram illustrating a metal processing system according to embodiments of the present disclosure and its operation in two production scenarios;
**Fig. 1c** is a system-level block diagram illustrating functional components of an additive casting system according to embodiments of the present disclosure; incorporating the metal processing system of **Figs. 1a-1b****;**
**Fig. 1d** is a schematic diagram illustrating a metal processing assembly that can be used with the additive metal casting of **Fig. 1c****;**
**Fig. 1e** is a detailed view of a bottom portion of the metal processing assembly of **Fig. 1d**, showing details of a powder introduction unit;
**FIG. 1f** **is** a detailed view of a bottom portion of another embodiment of a metal processing assembly incorporating a dual powder feeding configuration;
**Fig. 1g** **is** a flow diagram illustrating a method of additive metal casting according to embodiments of the present disclosure;
**Fig. 2a** is a schematic diagram illustrating components of a powder introduction system according to embodiments of the present disclosure;
**Fig. 2b** is a flow diagram illustrating a method of allocating cast-property modifying powder according to embodiments of the present disclosure;
**Figs. 3a-3b** are microscopy images and data plots showing experimental results of inoculant addition in cast iron according to **Experiment 1;**
**Figs. 4a-4h** are microscopy images, chemical analysis results, hardness measurements, and tensile test data showing experimental results of copper alloy addition in cast iron according to **Experiment 2;** and
**Figs. 5a-5b** are microscopy images and graphical data showing experimental results of magnesium treatment in ductile iron according to **Experiment 3.**

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE EMBODIMENTS

### Additives in metal additive manufacturing

While the use of inoculants and additives in traditional metal casting is known, the addition of inoculants and additives in metal additive manufacturing presents significant technical challenges that affect process stability, product quality, and manufacturing efficiency.

A fundamental technical challenge relates to the timing and distribution control of additives and inoculants within the molten metal during additive manufacturing processes. Unlike traditional casting methods, additive manufacturing processes typically involve small-scale melt pools and substantially rapid solidification rates, thereby providing limited time for proper chemical and metallurgical processes. This temporal constraint may result in a non-uniform distribution of the introduced materials, potentially leading to inconsistent material properties in the manufactured component.

Temperature management presents another significant technical hurdle. The process necessitates precise control within a narrow processing window, as the rapid heating and cooling cycles characteristic of additive manufacturing (e.g., DED) can substantially impact the dissolution rates of introduced materials. Temperature gradients within the melt pool may lead to premature solidification or undesired reactions, particularly at elevated temperatures where thermal decomposition of sensitive additives may occur.

Process-specific technical challenges vary depending on the additive manufacturing methodology employed. In powder-bed systems, limitations arise in achieving in-situ addition of materials, while pre-mixing with powder feedstock introduces complications related to powder handling, segregation, and flowability. Direct Energy Deposition (DED) systems face distinct challenges, including feed rate synchronization, management of multiple powder feeds, potential nozzle clogging, and complex powder stream interactions.

### Processing of iron and iron alloys in additive manufacturing

Iron (as well as steel) is commonly used in many industrial applications due to its high strength and durability. However, iron and iron alloys are more challenging to process in an additive manufacturing context (e.g., compared to aluminum). The processing of iron and iron-based alloys in additive manufacturing (AM) presents distinct metallurgical challenges primarily driven by the complex phase transformations and microstructural evolution during rapid solidification and subsequent thermal cycles. During cooling, iron undergoes multiple solid-state phase transformations. These transformations are extremely sensitive to cooling rates and thermal gradients. The resultant transformation products may suffer from the formation of non-equilibrium phases, exhibit varied grain morphologies and complex transformation products, and be susceptible to residual stress development and potential cracking.

The processing of iron and iron alloys in additive manufacturing techniques such as Laser Powder Bed Fusion (L-PBF), Electron Beam Powder Bed Fusion (EB-PBF), and Directed Energy Deposition (DED) is not yet solved on an industrial scale, and AM iron and iron alloy products are prone to warping, distortion, cracking or porosity during the additive manufacturing process. Due to its being brittle, iron cannot be processed into the form of a wire suitable for Wire-Arc Additive Manufacturing (WAAM). The melt pool width generated in DED techniques is typically about 0.5-2 mm and 0.2-0.8 mm depth. The melt pool volume is approximately 0.1-0.5 cubic millimeters (0.0001-0.0005 cc). The cooling rates of the melt pool in DED are extremely rapid, typically between 10^3-10^5 K/s, and the solidification time of the melt pool is at the order of milliseconds to microseconds. Thus, there is only a limited time for metallurgical transitions and homogenization. The rapid solidification process of the added molten metal in DED significantly limits the feasibility of a complete dissolution of additives, proper nucleation and growth of desired microstructures, and homogeneous distribution of alloying elements and control over phase transformations. Further, powder catch efficiency in DED is in the range of 20% to 30%.

### Voxelated casting, especially of iron and iron alloys with cast-property modifiers

The present disclosure focuses on the additive casting of voxels of molten metal (voxelated casting), especially of iron and iron alloys. Embodiments of the present disclosure will be exemplified with respect to grey cast iron and ductile iron.

Applicant has found that additive treatment of voxels of metal having a minimum volume for individual processing - with and without the addition of cast property modifying material - can result in the cast having metal properties characteristic of traditional casting.

The additive metal casting system and method of embodiments of the present disclosure enable production of cast parts that conform to established industry standards, including ASTM A48 for gray iron castings.

Experimental testing demonstrates that the voxelated additive casting described herein facilitate the formation of microstructures and mechanical properties that meet or exceed industry benchmark specifications. For example, grey cast iron test parts produced according to embodiments of the present disclosure involving voxelated heat treatment have been evaluated through radiographic testing conforming with ASTM E2033 Standard Practice for Radiographic Examination using Computed Radiography, with results indicating acceptable internal discontinuity characteristics as specified in industry standards for critical applications. Experimental testing of these grey cast iron test parts demonstrates enhanced mechanical properties compared to conventional casting benchmarks. Fatigue testing conducted on test samples reveals significant improvements in fatigue resistance, with certain embodiments exhibiting B50 fatigue resistance values of approximately 104 MPa and B10 fatigue resistance values of approximately 82 MPa, compared to conventional design limits of 54 MPa and 48 MPa, respectively. These enhanced values represent a substantial improvement in fatigue life, with some embodiments demonstrating fatigue cycle performance capable of exceeding 10 million cycles.

For illustration, embodiments of the present disclosure facilitate treating molten metal voxels, each in the range of 2 - 100 cc of molten metal with additives and/or inoculants. An experiment involving the treatment of molten metal voxels of about 30-60mm will be discussed in detail herein. Voxels of molten metal of the minimum volume or above can be individually processed, giving rise to cooling profiles of 1, 2, or more seconds up to minutes. Such cooling profiles are longer, e.g., compared to the cooling profiles of other additive manufacturing techniques (e.g., DED, SLM), and thus facilitate metallurgical and chemical processes.

Applicant has found that additive processing of voxels of molten metal requires the (1) remelting of previously solidified metal and (2) the combined processing of the newly added volume of molten metal and the volume of remelted previously-solidified metal. Thus, the minimum volume facilitating metallurgical and chemical processes is attributed to the volume of newly added molten metal and the remelting of previously-solidified metal.

The minimum volume of approximately 2 cubic centimeters represents a critical threshold needed for impacting the metallurgical properties of the cast. In some embodiments of the present disclosure, the vertical dimension of the minimum volume is in the range of 2-40mm. For example, 4mm, 6mm, 8mm, 10mm, 12mm, 20mm, 22mm, 24mm and 32mm, 36mm. In some embodiments of the present disclosure, volumes of molten metal of about 2cc, 5cc, 10cc, 20cc-80cc, 20cc-100cc are treated in a single production layer. A specific experiment of casting of a 100mmX40mm box in 5 production layers will be discussed further herein. In this experiment, the volume of molten metal treated in each of the production layer was in the range of 30-60cc.

Thus, the minimum volume requirement works in conjunction with mold region containment. The mold regions provide the mechanical boundary conditions necessary to provide heat and powder treatment to these volumes of molten metal, while the volumes themselves provide the thermal mass needed for proper metallurgical control.

According to an aspect of the present disclosure, there is provided an additive metal casting system and a method thereof for enabling the provision of inoculants, additives and other cast-property modifiers to voxels of molten metal in a locally-controlled and iterative manner during the additive casting of a metal (metallic) part.

According to an aspect of the present disclosure, a metal processing system is provided that facilitates the controlled provision of cast-property modifying powder to the molten metal as part of the additive casting. The metal processing system works in synchrony with a mold construction system to process voxels of metal residing in mold regions (cavities).

According to another aspect of the present disclosure, there is provided a metal processing system that allows controlling the mechanical and/or chemical and/or physical and/or metallurgical properties of the cast, as needed to ensure an optimal process both in terms of quality (metallurgy-wise and geometrically) and in throughput. According to another aspect of the present disclosure, there is provided a metal processing method for additive casting that incorporates operating a metal processing system that allows controlling the mechanical and/or chemical and/or physical and/or metallurgical properties of the cast.

The voxelated additive casting systems and methods described herein are founded on two interconnected fundamental principles that enable successful processing of ferrous alloys: First, the processing of metal within confined mold regions, which enables controlled melting and processing of substantial volumes of molten metal while maintaining geometric stability. Second, the processing of substantial volumes of molten metal (2cc and above) enables proper metallurgical control and cast property modifications through controlled thermal conditions and adequate processing time. These principles work in concert - the mold regions enable the processing of larger volumes by providing containment and thermal management, while the larger volumes enable proper metallurgical processes by providing sufficient thermal mass and processing time.

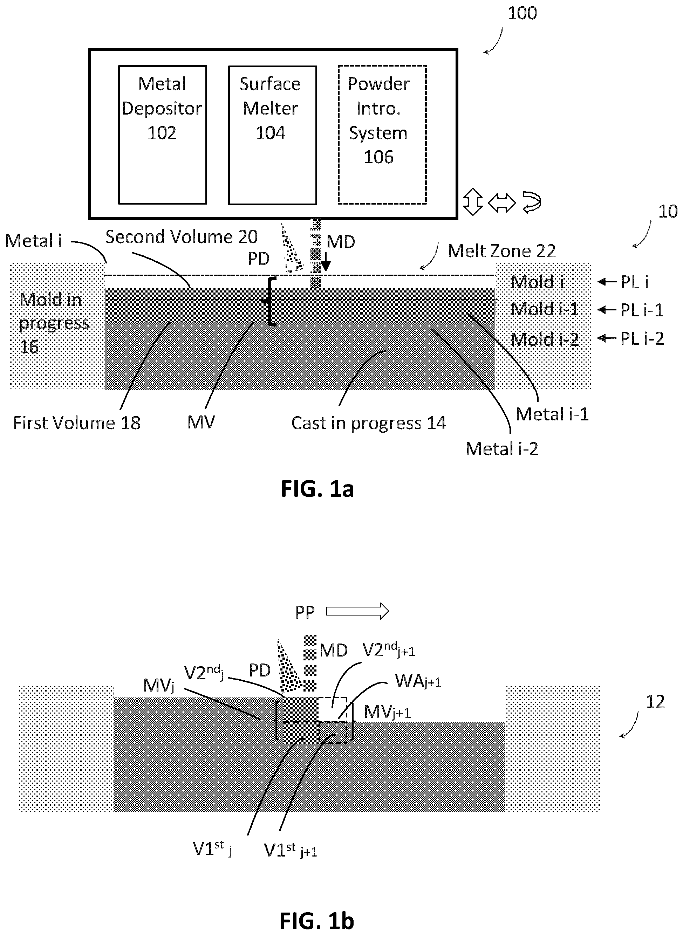

**Fig. 1a** is a block diagram of functional units and the functional processing organization of a metal processing system **100** for molten metal additive casting according to an embodiment of the present invention.

Metal processing system **100** comprises at least a metal depositor **102,** surface melter **104,** and powder introduction system **106.** An example **10** of a production scenario is illustrated in **Fig. 1a****,** illustrating the production of production layer **PLᵢ** by metal processing **100.** An interim production phase of production layer **PLᵢ** is shown - after the mold layer **Moldᵢ** is constructed and while producing metal layer **Metalᵢ.** Metal layer **Metalᵢ** is produced on top of cast-in-progress **14.** Cast-in-progress **14** is positioned within a mold-in-progress **16** on a build table (not shown). Mold-in-progress **16** is aimed at shaping cast-in-progress **14** and bounding a Melt Zone **22** from slipping over the upper face of the mold-in-progress.

In operation, during processing of the metal layers, elements **102, 104** and **106,** are physically located proximate to the upper face of cast-in-progress **14.** A voxel of molten metal - Melt Zone **22** - is generated by remelting a previously solidified metal - denoted as the First Volume **18,** and adding new molten metal - denoted as the Second Volume **20.** The volume of molten metal of the Melt Zone **MZ** is accumulated as the section of the cast-in-progress **14** is remelted (the First Volume) and new molten metal is added (the Second Volume). At the interim production phase illustrated in **Fig. 1a**, about half of the Second Volume is already provided.

Metal depositor **102** comprises source melting heater/s (not shown in **Fig. 1a**) and input metal source (not shown in **Fig. 1a**)**,** and is arranged to drip molten metal (e.g., release free-fall molten metal discrete drops, a continuous stream of molten metal drops or a flow of molten metal). A few free-fall molten metal drops **MD** are shown in **Fig. 1a****.** The newly added molten metal **MD** constitutes the Second Volume **20.** Metal depositor **102** may provide molten metal onto the upper surface of cast-in-progress **14** at a single deposition location, at several deposition locations, or continuously while scanning the upper surface of cast-in-progress **14.**

Surface melter **104** comprises heater/s (e.g., induction heaters) arranged to heat and melt the previously solidified section of the cast-in-progress **14** before, during, and/or after the addition of molten metal **MD.** For example, Surface Melter **104** is arranged as a planar coil dwelling above the upper surface of cast-in-progress **14.** After the First Volume and Second Volume accumulate into the complete melt zone, the melt zone may be maintained in a molten state for a predetermined duration.

Powder introduction system **106** is arranged to provide an allocated amount of cast-property modifying powder into melt zone **MZ.** The provision of the allocated amount of cast-property modifying powder may be realized as a single dose provided in a single provision site or as multiple doses provided at a single provision site or at multiple provision sites. A provision of a single dose of cast-property modifying powder - out of a series of, e.g., three - is illustrated.

**Fig. 1b** illustrates another example **12** of a production scenario implemented by metal processing system **100** shown in **Fig. 1a****.** In operation, during the processing of the metal layers, elements **102, 104,** and **106** are physically located proximate to the upper face of cast-in-progress **14** and travel thereon along a processing path **PP** (scanning). While traveling, a series of voxels **MV** are generated, each produced by remelting a first volume **V1^{st}ⱼ** of previously solidified metal and adding a second volume **V2^{nd}ⱼ** of new molten metal **MD.** Powder dose **PD** is provided to the molten metal voxel **MVj.**

In each production scenario, the allocated amount of cast-property modifying powder corresponds to the volume of the melt zone, attributed to the first volume and second volume. Applicant has found that the volume of the melt zone must be equal to or above a minimum volume.

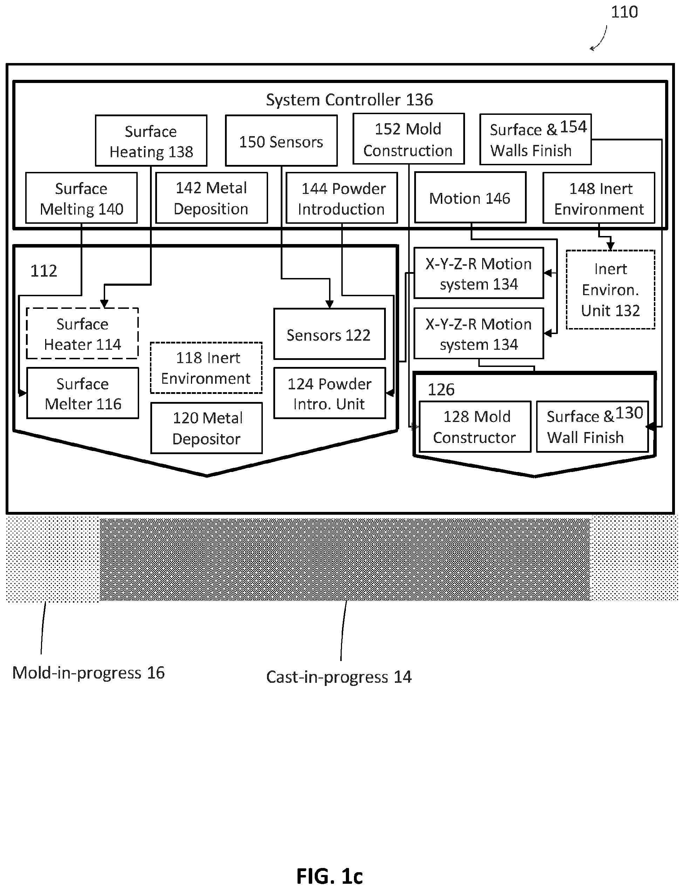

In some embodiments of the present disclosure, no cast-property modifying material is provided to the first and second volumes- either along the entire casting process or during a portion thereof. For applications requiring no provision of cast-property modifying powder, the additive casting system may be realized with a metal processing system (e.g., system **100** of Fig. 1a and system 112 of Fig. 1c) having no powder introduction system.

The determination of minimum volumes in additive casting is fundamentally driven by the metallurgical requirements of ferrous alloys' solidification and transformation processes. The minimum volume of approximately 2 cubic centimeters, for e.g., grey cast iron, represents a critical threshold below which proper metallurgical processes cannot be adequately controlled or achieved. This threshold is governed by several interconnected metallurgical phenomena:
(1) Thermal Mass Requirements: A sufficient volume of molten metal is essential to maintain the thermal conditions necessary for controlled solidification and transformation. Smaller volumes, such as those found in DED processes (0.0001-0.0005 cc), experience extremely rapid heat dissipation that prevents proper control over (i) nucleation and growth of graphite phases, (ii) pearlite formation and morphology and (iii) distribution and dissolution of inoculants and additives.
(2) Solidification Time Control: The voxel volume directly influences the solidification time through its thermal mass. A minimum volume of ferrous alloys of 2cc provides (i) cooling rates starting at the order of 1°C/second and slowly, allowing sufficient time for carbon diffusion and graphite formation; (ii) a processing window starting at the order of a few seconds, 1-10 seconds, preferably 2-5 seconds essential for complete dissolution of inoculants; (iii) controlled temperature gradients that prevent premature freezing and allow proper phase transformations.
(3) Chemical Homogenization: Proper dissolution and distribution of inoculants and additives require (i) sufficient liquid metal volume for complete dissolution; (ii) adequate time for chemical homogenization through both diffusion and convection; and (iii) thermal conditions that prevent premature precipitation or segregation.
(4) Graphite Morphology Control: in the case of cast irons, the formation of desired graphite morphologies (whether flake, nodular, or compacted) requires (i) stable thermal conditions during nucleation and growth; (ii) sufficient time for carbon diffusion and graphite precipitation; and (iii) adequate volume for unimpeded growth of graphite structures.
(5) Microstructural Development: the achievement of desired matrix structures (pearlitic, ferritic, or mixed) depends on (i) controlled cooling through the eutectoid transformation temperature; (ii) sufficient time for the formation and growth of pearlite colonies; and (iii) volume-dependent thermal gradients that influence transformation kinetics.

These metallurgical requirements establish the lower boundary of approximately 2cc for the voxel volume. Volumes below this 2cc threshold may result in: excessive cooling rates that prevent proper phase transformations; insufficient time for complete dissolution of additives; inadequate control over graphite morphology and distribution; inconsistent matrix microstructure; and poor mechanical properties

The upper limit of 100cc represents an upper volume that, in some embodiments, can be effectively and practically controlled while ensuring desired manufacturing throughput for certain applications and maintaining (i) uniform temperature distribution throughout the melt zone; (ii) consistent cooling rates across the entire volume; (iii) homogeneous distribution of additives and inoculants; and (iv) predictable and repeatable microstructural development. Embodiments of the present disclosure are not limited to the upper limit of 100cc and higher metal volumes can be processed in a voxelated manner.

According to embodiments of the present disclosure, the critical voxel volume is accumulated by (1) remelting metal residing in the previously-cast production layer and (2) depositing new molten metal.

**Fig. 1b** further illustrates the next voxel to be processed, **MVⱼ₊₁.** **Fig. 1b** depicts working area **WAj+1 -** a section of the upper face of cast-in-progress **14** that will be melted by surface melter **104** (giving rise to first volume **V1^{st}ⱼ₊₁**) and onto which the new molten metal drops will be added (**V2^{nd}ⱼ₊₁** ) to thereby generate molten metal voxel **MVj+1.**

The term "voxelated" is used herein to denote the ability of the embodiments of additive casting presented in this disclosure to process a specific voxel of molten metal. Voxelated metal processing is feasible due to the processing of the cast-in-progress - the previously solidified metal and newly added metal - within a mold cavity - the mold-in-progress.

The specific voxel under processing resides in a specific section of a specific production layer ("working area"). Upon processing the specific working area, a melt zone is created by heating up and melting the previously produced metal in the working area. The melt zone may further comprise the newly-added molten metal, e.g., dripped into the melt zone created in the working area by the melter. The volume of molten metal residing in the melt zone of a specific working area is denoted "molten metal voxel" or "voxel".

The term "working area" is used herein to denote the specific section of the upper face of the currently processed production layer below the metal processing system. For small-scale production layers or production layers having an object region with a length and a width at the same geometrical dimensions as the surface heater/s of the metal processing system, the entire production layer may constitute a single "working area". In large-scale production layers - e.g., production layers having object regions with lengths and widths larger than the geometrical dimensions of the surface heater/s of the metal processing system, the processing of the complete production layer involves processing multiple working areas in that production layer.

In some embodiments of the present disclosure, the processing of the multiple working areas in the production layer involves traveling over the production layer in a continuous scanning pattern or discrete scanning pattern.

In continuous scanning patterns, the working area comprises a dynamically moving area that follows the processing assembly's movement and, in the case of induction-based melting, the footprint of the melter. This dynamically moving working area is characterized by dimensions and operating parameters used for process planning and process control. For example, the dimensions of the heating area, the processing depth (combining layer height and remelt depth), the time of heating, melter's footprint (active heating area) and the deposition period. The continuous scanning pattern features the progressive movement of the melt zone with continuous overlap between adjacent working areas, facilitating continuous metal deposition and continuous or discrete powder delivery. This pattern may operate with constant or varying travel speed, continuous heat input, and synchronized powder delivery.

Discrete scanning patterns utilize distinct, stationary working areas where processing occurs, with clear boundaries between adjacent working areas. The dimensions of these discrete working areas are primarily determined by the fixed geometry of the surface heater and the processing depth. In this pattern, complete processing of one area occurs before moving to the next, involving distinct start/stop operations. The discrete pattern enables individual parameter control and distinct process optimization for each working area, operating through defined dwell times at each location and discrete powder delivery events.

Embodiments of the present disclosure will be further illustrated with reference to the continuous scanning pattern of the metal processing system (molten metal depositor, surface melter, and powder introduction unit), as well as a discrete powder introduction pattern.

The term "melt zone" is used herein to denote the change in the working area under the influence of the molten unit depositor, the surface heater/s, and the powder introduction unit - aimed at generating a melt zone of at least the minimum volume or above. The volume of the melt zone in the working area is growing under the combined influence of the molten unit depositor and the surface heater/s up to a desired critical Minimum Volume **MV** (the voxel), at which point the powder introduction unit delivers the powder into the voxel. Put differently, the critical Minimum Volume **MV** of molten metal (the voxel) is used for process planning, while the melt zone volume is a measure that dynamically changes during processing. The development of the melt zone may be sensed, monitored, and controlled in real time. For certain applications, a melt zone of 2cc of grey iron is developed - by melting and dripping - during 1-10 seconds.

The production scenarios illustrated in **Figs. 1a-1b** are performed under inert environment conditions facilitated by an inert environment unit (not shown in **Fig. 1a**).

**Fig. 1c** is a schematic illustration of an additive casting system **110** according to an embodiment of the present disclosure. Additive casting system **110** is arranged in a dual production assembly configuration: metal processing assembly **112** (e.g., metal processing system **100** discussed with reference to **Figs. 1a-1b**) and mold production assembly **126.** Each of the production assemblies is assigned with a dedicated X-Y-Z-R motion system **134** -for example, a large 6-axis jointed-arm robot or a gantry system capable of handling heavy objects. Embodiments of the present disclosure are not limited by the type of motion system that is used.

Not shown in **Fig. 1c** are a build table onto which the stack of production layers is produced; an optional production chamber; an optional production chamber heaters and coolers; an optional built table heaters; and supply and support systems such as power supply, metal supply, mold material supply, gas supply, powder supply, electronics and more.

System Controller **136** is also shown in **Fig. 1c****.** System Controller **136** may be implemented digitally or via one or more analog control systems. The system controller **136** may contain a processor with executable modules for controlling assemblies **112, 126** and units **114, 116, 118, 120, 122, 124, 128, 130, 132** and **134.** Executable modules in system controller 136 cover surface-heating **138,** surface melting **140,** metal deposition **142,** powder introduction **144,** motion **146,** inert environment **148,** mold construction **152,** and surface and walls finishing **154.** Executable code contains algorithms and routines needed to carry out the specific actions outlined by a specific building plan of additive metal casting according to the present invention.

The system controller **136** also receives sensor and feedback data from various sensors and detectors **122.** Sensors **122** may include sensors for temperature, flow rate, position, speed, pressure, cumulative mass, and material composition. Sensors **122** may include other sensors such as infra-red (IR) cameras, visible-wavelength cameras, weight sensors (e.g., source weight sensor and/or build table weight sensors), stereometric vision sensors (e.g., for measuring layer thickness), distance sensors and the like. The system controller **136** may also receive operator input (not shown) in order to precisely set up and control an additive metal casting process according to the present invention. The System Controller **136** relies on a build plan (not shown in **Fig. 1c**) for data, details, and parameters governing the additive casting operation.

System Controller **136** controls and coordinates the operation of the metal processing assembly **112** and mold construction assembly **126** to produce a stack of production layers, each with a mold region and an object region. In each production layer, the mold construction assembly **126** fabricates the mold region, thereby defining the shape and boundaries of the respective object region. When the mold region of a specific production layer is ready, the metal processing assembly **112** produces the respective object region. The mold regions of successive production layers constitute the mold-in-progress **16,** and the object regions of successive production layers constitute the cast-in-progress **14** held within mold-in-progress **16.** The principal operations of mold region fabrication and object region processing are carried out interchangeably, each at different thermal conditions and environmental conditions.

Mold-in-progress **16** is configured to withstand the expansion and shrinking forces exercised by cast-in-progress **14** during metal processing.

It will be understood that the construction and operation of the mold construction assembly **126** do not form part of the present disclosure and, therefore, are not described herein in detail, except to note the following: the production of the mold regions may be performed in-situ or ex-situ. In various in-situ embodiments, mold production assembly **126** comprises a mold constructor **128.** Mold constructor **128** may comprise - or is in fluid connection with - a mold material reservoir and a mold depositor (not shown in **Fig. 1c**). In other embodiments, mold production assembly **126** receives mold materials from remote storage. In an ex-situ embodiment, mold production assembly **126** receives from a remote source fabricated mold regions and/or mold frames assigned with multiple production layers. Mold materials may include mold materials in paste form, powder form, granular form, slurry form, and mold materials mixed with binders, releasing agents, activating agents, UV absorbing particles, crosslinking agents, heat-absorbing particles, or other additives to facilitate mold fabrication and use. According to embodiments of the present disclosure, mold materials include, but are not limited to, ceramics (e.g., zirconia, alumina, magnesia, etc.), sand, clay, metallic powders, and any combination thereof.

In some embodiments, mold production assembly **126** further comprises a mold surface and wall finish and treatment unit **130** including, but not limited to, drying, curing, milling, grinding, and polishing components, for example, for finishing the inner walls of the mold regions (cavities) before metal deposition, for semi-hardening or hardening the mold regions prior to metal deposition.

In some embodiments, the mold surface treatment unit **130** is capable of treating the upper surface of the mold region of the current production layer, for example, before constructing the mold region of a consecutive production layer.

PCT Patent Publications Nos. WO2023/275857 (filed April 14, 2022), WO2023/166506 (filed March 1, 2023), WO2024/100644 and WO2024/100642 (filed Nov. 9, 2022) commonly owned by Applicant disclose additional information regarding the production of mold regions, and are incorporated herein in their entirety.

Inert environment conditions for metal processing may be realized by a global inert environment unit **132,** configured to facilitate inert conditions, e.g., in a production chamber; a movable inert environment unit **118** accommodated in the metal processing assembly **112** and configured to facilitate inert conditions, e.g., proximate to the melt zone, or a combination thereof.

In various embodiments, surface melter **104** comprises one or more induction heaters, plasma heaters, electric resistance heaters, and torch heaters. Embodiments of the present disclosure will be further described with reference to a surface melter comprising induction heater/s.

In various embodiments, molten metal depositor **102** comprises crucibles, remote molten metal reservoirs, wire or rod stock for melting, powder for melting, or combinations thereof.

Embodiments of the present disclosure will be described with reference to input metal in the form of metal rods, e.g., certified grey cast iron rods. Using metal rods, particularly certified grey cast iron rods, as the source material for additive casting provides significant technical advantages over powder-based approaches. The use of metal rods ensures complete metallurgical integrity, as the deposited material maintains the exact composition and properties of the source material - what is melted is what is deposited, with no intermediate processing steps that could affect material properties. This approach leverages established foundry-certified source materials, providing full traceability, verified material properties, and reliable chemical compositions that meet industry standards. The melting process itself benefits from enhanced control when using metal rods. The system can precisely control the melting of a small volume at the rod tip, maintaining a consistent temperature. The vertical feeding arrangement enables gravity-assisted droplet formation, while rod rotation ensures even melting.

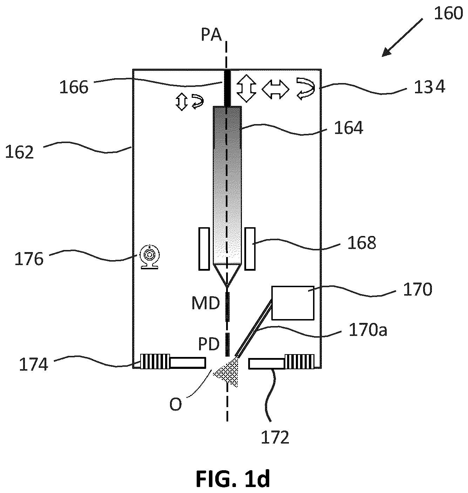

**Fig. 1d** depicts a metal production assembly **160,** illustrating additional aspects of metal production assembly **12** of Fig. **1c****.** Metal production assembly **160** is movable, e.g., by motion system **134,** shown in **Fig. 1c****.** Metal depositor **120** is shown in **Fig. 1d** as a metal source in the form of a metal rod **164,** a rod holder **166** and a source heater **168** (source melter). Source melter **168** is realized, e.g., as a solenoid-shaped induction heater surrounding rod **164.** Metal rod **164** is carried by rod holder **166,** which may adjust the vertical placement of rod **164** within Metal processing assembly **160** (moving the rod up and down along a provision axis **PA** of Metal processing assembly **160**). Rod holder **166** may rotate Rod **164** around the provision axis **PA.**

In the embodiment of **Fig. 1d****,** the metal depositor, surface heater/s, powder introduction unit, and the inert environment unit are physically coupled, e.g., by being physically attached to a common frame **162** or to each other.

In some embodiments, system controller **136** (shown in **Fig, 1c**) controls the generation and the accumulation of the Second Volume - the deposition rate - by controlling the operation of source heater **168,** the vertical placement of rod **164** within metal production assembly **160** (by element **166**) and the spatial placement of metal production assembly **160** with respect to the upper surface of the cast-in-progress (by element **134**).

In the embodiment illustrated in **Fig. 1d****,** the elements illustrated in Fig. 1c - 116, 118, 120 - are physically coupled and arranged as an integrated production assembly. Surface melter **116** (shown in **Fig. 1a**) is realized as a pancake-shape induction heater **172** having an opening **O.** Induction surface heater **172** is connected to common frame **162** also holding the metal source - rod 164 and its source heater/s 168 ), and is placed such that the provision axis **PA** crosses the opening **O.** Preferably, induction heater **172** has a circular symmetry and is placed concentrically around the provision axis **PA,** but this is not necessarily so. Induction heater **172** may comprise a single-turn or multi-turn induction coil. In some embodiments, surface induction heater **172** includes a circular-shaped multi-turn coil having an inner diameter of at least 30, 40, or 50 mm and an outer diameter in the range of 40-120 mm, for example, 45mm, 50mm, 55mm, 70mm, 100mm, 110mm. The size and shape of the surface induction heater **172** impact the size and shape of melt zone **22** (shown in **Fig. 1a**) that is generated by the surface induction heater **172** in the working area **WA** (shown in **Fig. 1b**). In the exemplified case of continuous melter/depositor scanning, the size and shape (width, length, depth) of melt zone **22** that is generated by surface induction heater **172** in working area **WA** are further attributed to operational parameters controllable by System Controller **136**, such as the movement velocity of the surface induction heater **172** generated by motion system **134** (which is the same as the depositor velocity, as the surface induction heater **172** is physically coupled to the depositor **120**)**,** height above the working area (adjustable by motion system **134**), and electrical and magnetically controlled parameters (e.g., current, frequency and more).

Powder introduction unit **124,** shown in **Fig. 1c****,** is realized in the embodiment of **Fig. 1d** as powder introduction unit **170** having an off-axis nozzle **170a** directed to provide doses of at least one cast-property modifying powder onto the melt zone **22** through opening **O** of surface melter **172.**

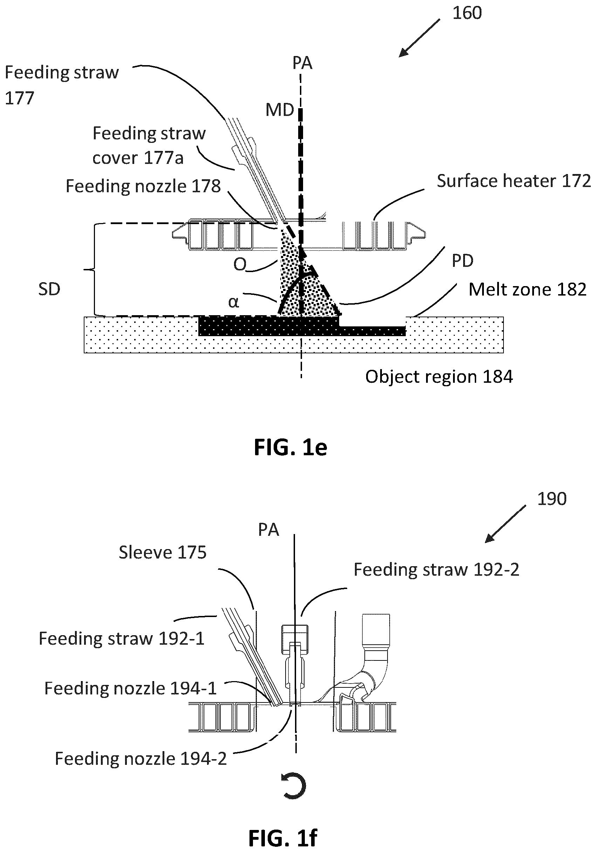

**Fig. 1e** depicts additional details of the bottom part of metal production assembly **160** of **Fig. 1d****.** The following elements of powder introduction unit **170** are shown in **Fig. 1e****:** feeding straw **177** (element 170a of Fig. 1d) ends with a feeding nozzle **178.** Feeding straw **177** is placed, at least in part, within a feeding straw cover **177a** that is made of a heat-resistant material. Feeding nozzle **178** is placed at a standoff distance **SD** above object region **184,** and is inclined with respect to the melt zone at an angle **α**. Feeding nozzle **178** is placed such that a desired spot size of cast-property modifying powder dose **PD** will be introduced on melt zone **182** through opening **O** and in the proximity of the provision axis **PA** of metal processing system **160.**

In the example embodiment of **Fig. 1e****,** powder nozzle **178** is shown as slightly extending into the opening **O** of the surface heater **172.** However, this is not necessarily so. In some embodiments, powder nozzle **178** extends deeper into opening **O.** In other embodiments, powder nozzle **178** extends through opening **O** and slightly below the bottom side of surface heater **172.**

**Fig. 1f** is a partial view of the bottom part of another embodiment of the present disclosure, depicting a metal processing assembly **190** incorporating a dual feeding configuration. And a protective sleeve 175. Two feeding straws **192-1** and **192-2,** are shown, crossing the protective sleeve 175 and ending with respective feeding nozzles **194-1** and **194-2,** each placed at a different position in the X-Y plane. Feeding straws **192-1** and **192-2** have different spatial positions, for example, - a 90̊ azimuthal displacement with respect to the provision axis **PA,** but this is not necessarily so, and other spatial arrangements can be implemented. In some embodiments, some powder is provided via powder nozzle **194-1** and some - via powder nozzle **194-2.** Powder straws **192-1** and **192-2** may have a similar powder delivery angle or a different powder delivery angle. Powder straws **192-1** and **192-2** may similarly extend into opening **O** - or differently. The respective powder spot sizes provided via feeding nozzle **194-1** and **194-2** may be similar or different. In some embodiments, the physically coupled surface heater and metal depositor have a rotational degree of freedom around provision axis **PA,** and the respective powder nozzles are activated depending on their rotational position. In some embodiments, powder nozzles **194-1** and **194-2** can be operated in parallel, for example, each delivering different powders or the same powders. The present disclosure is not limited by the number of feeding nozzles and more than two feeding nozzles may be incorporated.

In some embodiments, a coaxial feeding configuration - coaxial to provision axis **PA** - is incorporated. The coaxial feeding configuration may include a single feeder or more.

During operation of the system illustrated in **Figs. 1d-1f****,** the source heater **168** heats rod **164,** for example heats the tip and shoulder area of rod **164** (source heating). In response, molten metal **MD** drips down onto the working area/melt zone **182** (deposition locations) in discrete drops, continuous dripping, or a stream. Melting heater **172** heats and melts previously-solidified metal in the working area and generates melt zone **182.** The powder delivery system provides predetermined amounts of cast-property modifier powder at predetermined powder provision locations.

The position, volume, shape, and temperature of molten metal voxel **182** (melt zone) under the influence of melting heater **172** and source heater **168** may be sensed (sensor **176** shown in **Fig. 1d**). The readings of the sensed parameters may be used by the system controller **136** (shown in **Fig. 1c**) to control the source heater **168** and the surface heater **172.** The deposition flow rate is a function of the travel speed of the rod in the metal production assembly **160** over the working areas. The readings of the sensed parameters may be used by the system controller to control the travel speed of the metal production assembly **160** over the working areas.

System Controller **136** may further be configured to implement a continuous scanning mode wherein the metal processing assembly moves continuously along a processing path while maintaining a dynamic melt zone; and a discrete scanning mode wherein the metal processing assembly processes distinct working areas sequentially, wherein the controller selects the scanning mode based on at least one of part geometry, thermal requirements, or material properties.

System Controller **136** may be further configured to adjust scanning parameters in response to real-time thermal feedback; maintain minimum melt zone volumes specific to each scanning mode; coordinate the timing of powder introduction with the selected scanning mode; and manage thermal conditions at boundaries between adjacent working areas.

Thus, System Controller **136** is capable of monitoring the accumulation of volume of molten metal and coordinating the provision of cast property modifier powder to a desired volume of molten metal.

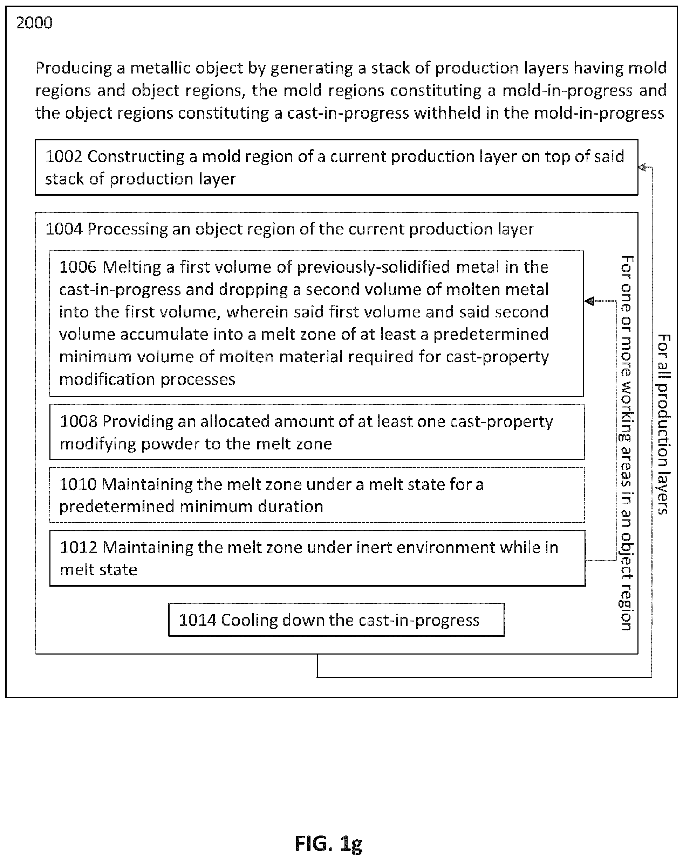

Referring now to **Fig. 1g****,** a flow diagram **1000** illustrates a method of additive metal casting according to embodiments of the present disclosure. The method is directed to producing a metallic object by generating a stack of production layers having mold regions and object regions, wherein the mold regions constitute a mold-in-progress and the object regions constitute a cast-in-progress withheld in the mold-in-progress.

The method comprises iteratively constructing successive production layers, each production layer involving two principal operations. In the first principal operation, **1002,** a mold region of a current production layer is constructed on top of the stack of production layers. In the second principal operation, **1004,** an object region of the current production layer is processed.

The processing of the object region **1004** involves a series of operations performed for one or more working areas within the object region. These operations include, at **1006,** melting a first volume of previously solidified metal in the cast-in-progress and dropping a second volume of molten metal into the first volume. The first volume and second volume accumulate into a melt zone with at least a predetermined minimum volume of molten material required for cast-property modification processes.

As the melt zone is established, the method proceeds to operation **1008,** where an allocated amount of at least one cast-property modifying powder is delivered into the melt zone. The method continues with optional operation **1010** of maintaining the melt zone under a melt state for a predetermined minimum duration, and at operation **1012,** maintaining the melt zone under an inert environment while in the melt state. For a single working area, surface heating may occur before metal deposition (pre-deposition heating) and/or after (post-deposition heating). Melting may be achieved during pre-deposition heating, during metal deposition, and during post-deposition heating.

As indicated by the annotations in **Fig. 1g****,** these operations are performed for one or more working areas in an object region, and the entire process is repeated for all production layers until the metallic object is complete. The hierarchical arrangement of operations **1006, 1008, 1010,** and **1012** within operation **1004** illustrates the sequential and concurrent nature of the metal processing steps performed within one or more working areas constituting the object region of each production layer.

The sequence of operations **1006, 1008, 1010,** and **1012** is performed until the entire object region of the current production layer is ready. In production scenario **10** illustrated in **Fig. 1a** - where the entire object region of the current production layer is processed together, the sequence of operations **1006, 1008, 1010,** and **1012** is carried out a single time for the current production layer. In production scenario **12** illustrated in **Fig. 1b** - where the sections of the object region of the current production layer are processed sequentially while the metal processing system scans the current production layer, the sequence of operations **1006, 1008, 1010,** and **1012** is carried out several times in each production layer.

As indicated with respect to the embodiment discussed with reference to Figs. **1d-1f****,** the cast property modifying powder is provided in a discrete manner while the depositor continuously drips molten metal and the melter continuously melts the working areas as the metal processing assembly scans the current production layer. Embodiments of the present disclosure are not limited to this manner of operation.

After the entire object region of the current production layer is processed, and before moving on to the construction of the mold region of the next production layer, the cast-in-progress is cooled down (operation **1014**)**.** In some embodiments of the present disclosure, the cast-in-progress is cooled down from a metal processing temperature, e.g., 1150-1300̊C for iron and iron alloys, to a mold construction temperature, e.g., about 700, 600, 500, 400, 300, 200̊C for an in-situ mold construction with a ceramic material. In some embodiments, the temperature of the upper surface of the cast in progress is sensed, e.g., with a thermal camera (sensor **176** shown in **Fig. 1d** having an appropriate line of sight toward the upper surface of the cast in progress), and method **1000** iterates from mold construction (operation **1002)** to metal processing (operation **1004)** only when the temperature of the upper surface of the cast-in-progress indicates a proper temperature.

Different metal cool-down durations and different mold construction temperatures may be set for different production layers.

### Powder allocation and introduction

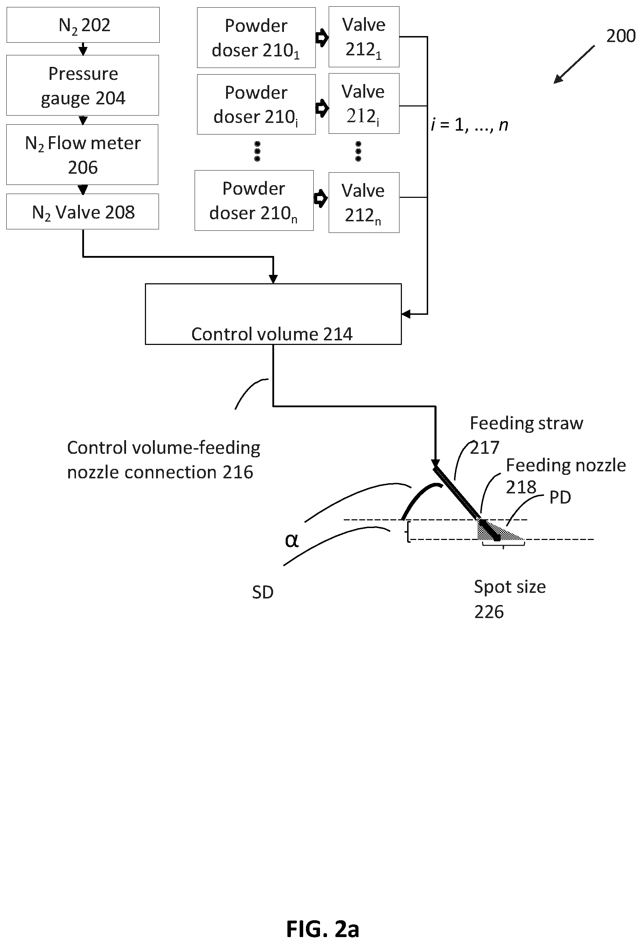

**Fig. 2a** is a schematic illustration of a powder introduction system **200** (generally shown as element **106** in **Fig. 1a****,** element **124** in **Fig. 1c****,** and partially shown also in **Figs. 1d-****1e**). The powder introduction system **200** is responsible for introducing the cast property modifying powder - inoculant and/or additive powder, denoted herein in short as "powder" - into the melt zone (as explained with reference to **Figs. 1a-1e****).** In some embodiments, the powder introduction system **200** is gas-assisted. The cast property modifying powder is delivered by spraying one or more powder shots/doses into the melt zone. Each powder shot is provided with kinetic energy sufficient to overcome the surface tension of the melt zone. Upon delivery, the powder dissolves in the melt zone. The molten metal that drips into the melt zone (before, during and/or after powder provision) may contribute additional heat to the melt zone and support the agitation of the powder particles in the melt as well as homogenous dissolution.

Various elements of the gas-assisted powder introduction system **200** are shown in **Fig. 2a****:** Gas (N2) reservoir **202,** pressure gauge **204,** N2 flow meter **206,** and N2 valve **208.** Powder dosers of Inoculants/additives and other cast property modifiers (reservoirs) **210i** (i=1,...,n), each equipped with a dosing mechanism (e.g., valves **212** i (i=1,...,n)), and sensors (not shown) to provide a desired powder amount and monitor the amount of powder remaining. Fine dosing at the level of a few micrograms up to a few grams per dose is provided. For example, from 1-2 micrograms up to 2, 5, and 10 grams per dose.

The powder content to be delivered is collected and contained at control volume **214.**

Upon delivery, the powder to be delivered is pressured through connection **216** toward powder nozzle **218.** Powder nozzle **218** is physically coupled to the depositor (element **126,** shown in **Fig. 1a**). Powder nozzle **218** is directed toward the working area. The center of the powder nozzle **218** may be directed toward the center of the working area (melt zone). Powder stream/dose **PD** is released, e.g., blown into the melt.

Depending on the geometrical specifications of the deposition area (e.g., geometry specifications of the tip of the rod, melting heaters, surface heaters, working distances of various elements respective to the melt zone, and more) and powder properties (e.g., particle size), respective powder delivery compulsion (gas pressure), powder delivery angle **α** and powder nozzle standoff distance **SD** are defined.

The powder delivery angle **α** is critical for optimal powder penetration and distribution in the melt zone. The delivery angle typically ranges from 15° to 75° from the horizontal, with a range of 30-60° for most applications. The powder delivery angle **α** range is determined based on factors such as (i) melt zone surface tension characteristics; (ii) required powder penetration depth; and (iii) gas flow dynamics.

The standoff distance **SD** depends upon the desired powder delivery spot size as well as the spatial relations between the mold region, object region, and various additive casting system elements such as the surface heater and molten metal depositor. Powder stream divergence characteristics and gas compulsion characteristics should also be considered.

The powder delivery spot size **226** may be set in consideration of the following factors: melt zone dimensions and thermal conditions; required powder distribution pattern; and distribution and concentration requirements of additives.

For example, the spot size **226** of powder nozzle **218** may be in the range of 2-50mm in diameter (for example, 5-45mm), and the standoff distance **SD** may be in the range of 10-60mm (for example, 12-60mm, 20mm-50mm) . The powder delivery angle **α** may be in the range of 15-75̊ to the melt zone.

In some embodiments of the present disclosure, the system achieves powder catch efficiency in the range of 75-95% (for example, 80-80%), significantly higher than conventional powder-based additive manufacturing methods. This high efficiency is achieved through, e.g., (i) geometric optimization: utilizing a larger melt zone upper surface comparing conventional powder-based additive manufacturing methods, and alignment of powder stream with the center of the melt zone surface, optimization of delivery angle relative to melt surface tension and control of powder stream coherence; (ii) process parameter optimization, such as with gas pressure, powder particle size distribution and gas flow rate and (iii) timing synchronization with e.g., melt zone formation and powder delivery latency time.

According to embodiments of the present disclosure not shown in **Fig. 2a****,** the powder introduction system may further comprise one or more of (1) real-time powder flow monitoring; (2) feedback control for powder delivery rate; and (3) thermal protection elements.

The cast property modifying powder may comprise a chemically-modifying material and/or a metallurgically-modifying material.

For the processing of cast iron alloys, the cast property modifying powder material may be one or more powder materials selected from (1) a group of grain refiners consisting of Titanium-based alloy, Zirconium-based alloy, Niobium-based alloy and/or (2) a group of inoculants consisting of Ferrosilicon-based inoculants, aluminum-based inoculants, Silicone carbide-based inoculants, Calcium-based inoculants, Strontium-based inoculant, Cerium-based inoculants, Sodium-based inoculants, Barium-based inoculants, Rare earth elements and/or (3) a group of Deoxidizers consisting of Aluminum, Silicon, Manganese, Calcium and/or (4) a group of Microstructure modifiers consisting of Magnesium, Cerium, Lanthanum, Yttrium and/or (5) a group of Carbide formers consisting of Vanadium, Titanium, Tellerium, Tungsten, Molybdenum.

For the processing of steel or steel alloys, the cast property modifying powder material may be one or more powder material selected from (1) a group of grain refiners consisting of Aluminum-based alloy, Titanium-based alloy, Zirconium-based alloy, Niobium-based alloy and/or (2) a group of Deoxidizers consisting of Aluminum, Silicon, Manganese, Calcium and/or (3) a group of Microstructure modifiers consisting of Magnesium, Cerium, Lanthanum, Yttrium and/or (4) a group of Carbide formers consisting of Vanadium, Titanium, Tungsten, Molybdenum, Niobium and/or (5) a corrosion resistance modifiers consisting Chromium, Nickel, Molybdenum, Silicon, Aluminum, Titanium, Niobium, Phosphorus.

The cast property modifying powder is provided to the processed metal in order to initiate a cast property modification process such as (1) controlled graphite nucleation and growth achieving a predetermined graphite morphology and/or distribution; (2) controlled phase transformation producing a predetermined ratio of phases; (3) in-situ chemical composition modification achieving predetermined local material properties; (4) Grain refinement producing enhanced mechanical properties; (5) precipitation hardening; or (6) controlled solidification process producing predetermined dendrite arm spacing, or a combination thereof.

The quantitative relationships between additive concentrations and resulting properties are well-established through decades of industrial practice and academic research. These established relationships provide a reliable foundation for predicting and controlling the effects of additives in cast metals, making them particularly suitable for implementation in controlled voxelated casting processes. The challenge lies not in understanding what effects will be achieved but rather in precisely delivering known quantities of additives at the right time and location during the voxelated casting process.

According to embodiments of the present disclosure, the cast-property modifying powder type and mass for a volume of metal of a specific production layer is obtained based on known additive concentrations.

The amount of powder delivered into a specific working area in the specific production layer correlates with the molten metal voxel - the volume of molten metal in the melt zone that is ready to receive that amount of cast-property modifying powder, following additive concentrations knowing in the art and system geometric configuration details: the powder nozzle standoff distance, powder delivery angle and catch efficiency.

For optimal process control, powder introduction should occur when melt zone conditions are optimal: e.g., the desired voxel volume - at least the minimum voxel volume - is accumulated and proper melt zone temperature is achieved.

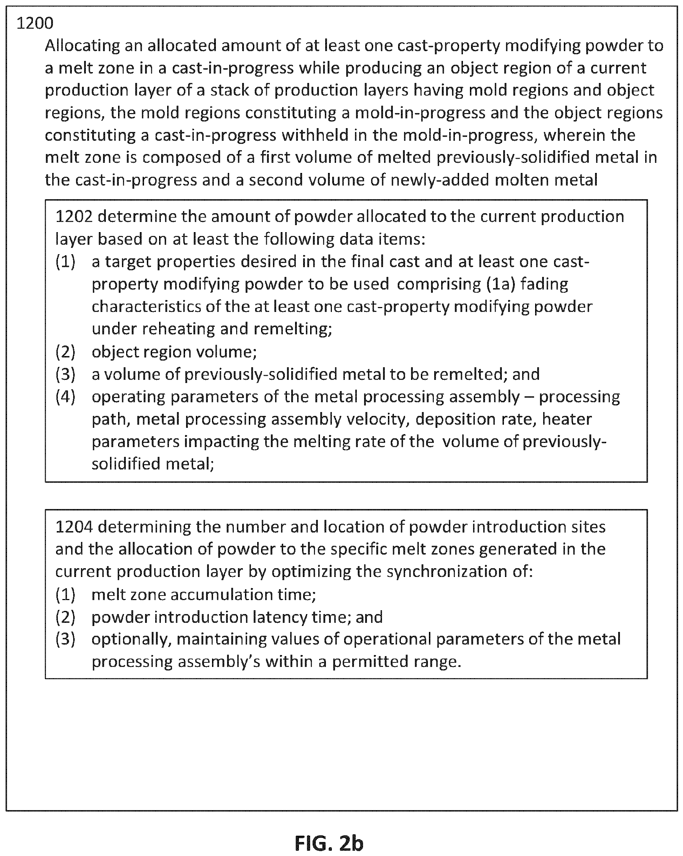

In some embodiments of the present disclosure, the introduction of powder into the melt zone generated in the specific working area under processing is defined by a production layer powder provision plan. According to embodiments of the present disclosure, the powder provision plan is determined by a two-step determination process, illustrated in **Fig. 2b****.** At a first step, to a specific production layer, and at a second step, the provision sites and allocation of the specific doses to the provision sites is determined for the specific production layer.

**Fig. 2b** depicts a method **1200** for allocating an allocated amount of at least one cast-property modifying powder to a melt zone in a cast-in-progress while producing an object region of a current production layer of a stack of production layers having mold regions and object regions, the mold regions constituting a mold-in-progress and the object regions constituting a cast-in-progress held within the mold-in-progress, wherein the melt zone is composed of a first volume of melted previously-solidified metal in the cast-in-progress and a second volume of newly-added molten metal. Method **1200** starts, for each production layer, in operation **1202** of obtaining the following data items: (1) the target properties desired in the final cast and at least one cast-property modifying powder to be used comprising (1a) fading characteristics of the at least one cast-property modifying powder under reheating and remelting (2) object region volume; (3) the volume of previously solidified metal to be remelted; and (4) operating parameters of the metal processing assembly - processing path, metal processing assembly velocity, deposition rate, heater parameters impacting the melting rate of the volume of previously-solidified metal.

The volume of previously solidified metal to be remelted: as described, the operations that are carried out in the fabrication of the object region of the currently-produced production layer impact the previously-produced object region of the previously-produced production layer. In some embodiments of the present disclosure, the depth of the melt zone is designed to extend the height of the currently-produced production layer. Thus, previously-produced object regions of the previously-produced production layer/s are remelted.

For illustration, in some embodiments, the height of the currently-produced production layer may be, for example, in the range of 3 12 mm or 5-10mm. In the case of layer height of, e.g., 8 mm, the generation, in the production of production layer i, of a melt zone depth of 16 mm involves remelting metal that was deposited, for example, during the production of production layers i-1 and i-2.

Fading characteristics of the at least one cast-property modifying powder under reheating and remelting: the type of cast-property modifying powder, especially its response to heating and remelting, is also considered. Some cast-property modifying powders are heat-sensitive and are subject to fading during subsequent reheating and remelting cycles inherent to the additive casting process. When a section of previously solidified metal that was treated with heat-sensitive cast-property modifying powder is reheated above its melting temperature, the effectiveness of the previously added powder diminishes according to a characteristic fading rate. This fading occurs due to various metallurgical phenomena, including oxidation, vaporization, and chemical decomposition of the active elements in the powder. To compensate for this fading effect, embodiments of the present disclosure implement an adaptive powder introduction strategy wherein the allocated amount of cast-property modifying powder delivered to a specific melt zone is adjusted based on (1) the predetermined fading rate of the specific powder being used, (2) the thermal history of the previously-solidified metal in the melt zone, including the number and intensity of reheating cycles it has experienced, and (3) the target properties desired in the final cast. This adaptive strategy ensures consistent metallurgical and mechanical properties throughout the cast despite the cumulative effects of repeated thermal cycles on the active elements in the cast-property modifying powder.

For example, for production scenarios involving the homogeneous distribution of target properties along the x-y production plan (homogeneous distribution in a specific production layer) and along the Z direction (even distribution among all of the production layers), and one remelting cycle of a first volume at the same value of the second volume, the respective production plan employing a fading powder A and a non-fading powder B may involve the provision of fading powder A in an amount allocated to the first volume (remelt) and second volume (newly added) and the provision of non-fading powder B in an amount allocated to only the second volume (newly added).

Processing path - the definition of working areas to be processed: bearing in mind the discussion of scanning patterns provided in reference to **Figs. 1a-1b****,** and with respect to the embodiment of the present disclosure employing a continuous scanning pattern of the metal processing system and a discrete powder introduction pattern, the definition of working areas to be processed comprises the following data items for each production later: (4.1) the melt zone creation plan: in some embodiments, the melt zone creation plan is designed as a plan for the creation of a sequence of working areas, each referred to as a 'current working area', that may partially overlap. The partial overlap and the number of working areas is determined; (4.2) the x-y position of each working area is determined - to be used, e.g., by the system controller to control and coordinate the operation of at least the metal depositor, melter and powder introduction unit while the metal processing system scans the current production layer; (4.3) the volume of the melt zone to be generated at the working area including (4.4) the first volume of the volume of previously-solidified metal to be remelted and (4.5) the second volume of molten metal to be added into the melt zone to be generated in this working area.

The amount of powder allocated to the current production layer is determined based on the above-listed data items and known quantitative relationships between cast-property modifiers' concentrations and resulting properties.

After the amount of powder allocated to the current production layer is determined in operation **1202,** the method continues to operation **1204** of determining the number and location of powder introduction sites and the allocation of powder to the specific melt zones generated in the current production layer.

In some embodiments of the present disclosure, the production layer powder provision plan comprises the determination of the number and location of powder introduction sites and the allocation of powder to the specific melt zones. This may be performed by ensuring synchronization of powder allocation with melt zone creation by optimizing the synchronization of the below-listed conditions:
(1) melt zone accumulation time: timing the provision of powder dose to the melt zone: ensuring that a minimum time period required for the formation and stabilization of the Minimum Volume - the metallurgically viable molten metal voxel in the working area - is provided. This condition reflects the accumulative nature of the melt zone generation - the time needed for the accumulation of molten metal attributed to melting and deposition. For example, for 2cc voxels of grey cast iron, the accumulation time is in the range of 1-10 seconds, for example, 2-8 seconds.
(2) powder introduction latency time: timing the introduction of powder dose after a powder introduction latency time lapses. The powder introduction latency time represents the total time needed between successive powder releases. The powder introduction latency time consists of the time the various components of the powder introduction unit require between successive operations. For example, the latency of the powder introduction unit is impacted by, e.g., the mechanical response time of the dosing mechanism (valves, actuators), powder properties (flowability, particle size), and powder mass to be released, and the time for the powder to travel through delivery tubing, the control volume, and the feeding nozzle. Other factors are system geometry and gas flow properties. According to embodiments of the present disclosure, the powder introduction latency time is, e.g., in the range of 0.1-1 seconds, for example, 0.2-0.6 seconds, giving rise to the provision of 1-100 powder doses per a 2cc melt zone.

In some embodiments of the present disclosure, in order to simplify process control over dynamic parameters (e.g., the current supplied to the surface heater/s, the velocity of the heater/s in their progress over the working area along the deposition path (which is identical to the velocity of the depositor) and the working distances of various elements respective to the melt zone (which, in some embodiments, are tied to the working distance of the depositor respective to the melt zone ), the deposition rate, the current provided to the source heater, and the working distance of the depositor respective to the melt zone, the following condition is also considered:

(3) optionally, maintaining values of operational parameters of the metal processing assembly within a permitted range. For example, maintaining substantially fixed operational parameters values for each production layer: fixed depositor/surface heater/s velocity, fixed depositor/surface heater/s working distance respective to the melt zone , and fixed surface heater/s and source heater current supply and allowing adjusted operational parameters within a predefined threshold around these fixed operational parameters values.

In some embodiments, the powder may be introduced in a single instance in a working area: a single shot to be provided into the melt zone generated in the working area. In other embodiments, the powder may be introduced in several instances in a working area: multiple shots are provided into the melt zone. In yet other embodiments, the powder may be introduced in a single instance for multiple working areas, for example, 2, 3, or 4 working areas. The powder mass in each shot is adjusted accordingly.

In some embodiments employing more than a single feeding nozzle, multiple shots may be allocated between different feeding nozzles, thereby allowing additional operational flexibility.

Concurrently to metal deposition and metal remelting, powder nozzle 184 selectively delivers cast property modifying powder onto the currently-produced working area (melt zone). In some embodiments, cast property modifying powder may be delivered into each and every working area (continuous powder delivery mode). In other embodiments, cast property modifying powder may be delivered into selected working areas (discrete powder delivery mode).

In some embodiments, in both the continuous and discrete powder delivery modes, a single powder dose/shot per working area is provided. In other embodiments, multiple powder shots are provided per working area.

In some embodiments, the coverage area of the powder shot (spot size) depends on the delivery plan: the powder shot coverage area in the discrete powder delivery mode may be larger than the powder shot coverage area in the continuous powder delivery mode.

In some embodiments, the coverage area of the powder shot may have a diameter in the range of 2-50 mm.

In some embodiments, all of the powder shots to be delivered have the same cast property modifying powder content. In other embodiments, the exact content of cast property modifying powder to be delivered into a specific working area is different from the content to be delivered to another working area to provide the desired microstructure, geometry, composition, and mechanical properties as defined by the building plan.

Precise powder delivery into properly formed melt zones is key for optimal cast property modification, consistent metallurgical results, and process repeatability.

Thus, according to embodiments of the invention, the following operational parameters are sensed (e.g., by sensor/s **150** shown in **Fig. 1c**): the position of the depositor and the surface heater/s and the working distance (the distance of the depositor and the surface heater/s respective to the surface of the melt zone) - e.g., by position sensors; the deposition rate, e.g., by a weight sensor sensing the weight of the metal source (metal rod); current supply; the temperature of the melt zone - e.g., a thermal camera. The powder introduction unit may be equipped with adequate sensors (not shown in **Figs. 1c****,** **2a-2b**) for sensing the presence of powder in the various elements of the powder introduction unit, e.g., doser/s, control volume, feeding connections, straw, and nozzle.

According to embodiments of the invention employing operational sensors, the fulfillment of the operational conditions for powder introduction are dynamically sensed. In case the operational conditions for powder introduction are unmet, the system controller may adjust one or more of the following operational parameters: deposition/surface heating velocity, deposition/surface heating working distance, surface heating current supply, and source heating current supply.

Electromagnetic stirring effect: in some embodiments employing an induction-based surface melter (surface induction heater), and in dependence with the melt zone's volume, fluid dynamics within the molten metal voxel may enhance the metallurgical processes. When the alternating electromagnetic field from the surface induction heater interacts with the electrically conductive molten metal, it induces eddy currents within the melt zone. These eddy currents interact with the magnetic field to produce Lorentz forces following the cross-product relationship F = J × B, where F represents the force vector, J the current density vector, and B the magnetic field vector. The electromagnetic interaction may generate e.g., in the case of a pancake-shape surface induction heater, a toroidal flow pattern characterized by upward movement at the voxel's center, outward flow along the top surface, downward movement at the periphery, and inward flow along the bottom. The flow pattern's specific characteristics depend on the induction frequency, current amplitude, coil geometry, and the electromagnetic skin effect that creates non-uniform force distribution within the melt.

The electromagnetically-driven fluid flow (electromagnetic stirring) described above provides several metallurgical advantages. The circulation pattern (stir) accelerates the dissolution and distribution of cast-property modifying powders introduced into the melt zone, ensuring homogenous dissolution throughout the voxel volume. Additionally, the stirring action redistributes heat throughout the voxel, reducing temperature gradients and enabling more precise control over solidification parameters critical for achieving desired microstructures. The fluid flow may assist with breaking up any oxide layer (or portions of such oxide layer) if such was formed on the surface of the previously-solidified cast section upon its solidification. Breaking or eliminating oxides ensures proper metallurgical bonding between successive metal layers and minimizing oxide inclusions that could otherwise compromise the structural integrity of the final cast. The fluid motion disrupts the formation of large columnar grains during solidification, promoting equiaxed grain structures that enhance mechanical properties such as strength and fatigue resistance. Furthermore, electromagnetic stirring helps eliminate gas bubbles and reduce microsegregation, resulting in denser castings with fewer defects, supporting the superior metallurgical quality attainable through the present methods.

The fluid dynamics within the voxel can be controlled through several operational parameters of the induction melter. Adjusting the induction frequency affects penetration depth and stirring uniformity, with higher frequencies producing more concentrated forces near the surface and lower frequencies allowing deeper penetration. Current amplitude modifications directly influence stirring intensity, with stronger currents generating more vigorous movement. The specific pancake-shaped coil geometry described herein (e.g., element 172 of Fig. 1d) illustrates coil design considerations that influences the flow pattern useful for layer bonding and additive distribution. In some embodiments, pulse modulation of the electromagnetic field creates periodic variations in flow patterns, which can be tuned to optimize additive distribution and thermal management. Turning back to **Figs. 1a-1c****,** according to embodiments of the present disclosure employing surface induction heater/s **104,** controller **136,** e.g., via surface melting module **140,** may further control the electromagnetic stirring action within the melt zone.

In some embodiments, controller **136** may control the electromagnetic stirring action by dynamically adjusting one or more induction parameters to optimize the fluid dynamics for specific cast-property modification processes. The controller may modulate the induction frequency, current amplitude, pulse patterns, and/or dwell times.

In some embodiments, controller **136** may dynamically adjust one or more induction parameters based on real-time feedback from e.g., the temperature sensors 122 and other sensors.

In some embodiments, controller **136** may adjust one or more induction parameters based on predetermined models of fluid flow behavior for different metal alloys and melt zone geometries. For example, in some embodiments, the controller may apply variable frequency modulation to create staged fluid flow patterns, first utilizing higher-amplitude, lower-frequency current to generate deep penetration stirring that breaks up any oxide layer on the previously-solidified metal, followed by transitioning to higher-frequency patterns that concentrate energy near the surface to maintain optimal temperature while ensuring homogeneous distribution of additives.

The controller may further coordinate the timing of the powder introduction from system **106** with specific phases of the electromagnetic stirring cycle to maximize dissolution efficiency and uniform distribution. For alloys requiring longer dissolution times, the controller can implement extended stirring cycles with reduced power to maintain the melt zone temperature while allowing sufficient time for complete dissolution and homogenization of the cast-property modifying powder within the molten metal volume.

The electromagnetic stirring control functionality enables precise metallurgical management that would be unattainable in static melting conditions, directly supporting the consistent achievement of desired mechanical and physical properties in the finished cast.

Embodiments of the present disclosure are useful for the processing of large metallic parts. For illustration, in some embodiments, 3, 5, 10, 20, 30, 40, and more layer production iterations can be performed. In some embodiments, layer heights may range from 2 millimeters to 12, 15, or 20 millimeters. The melt zone width may be in the range of 4-100mm (for example, 10-60mm), melt zone length 4-100mm (for example, 10-60mm), and melt zone depth - in the range of 2-50mm and more. In some embodiments, melt zone depth of, for example, 4mm, 8mm, 10mm, 12-40mm, is desirable. in some embodiments, the depth of the melt zone may be extended up to 120mm. The upper limit for the voxel's volume to be melted and remelted depends, among other factors, in the ability of the respective mold region to withstand heating and reheating cycles of the metal with no failure). The amount of molten metal to be reheated and remelted in the production of a single working area - the voxel - may be in the range of 1cc, 2cc, 5cc, 10cc, and more, up to 100cc (approximately 14-720 grams of grey cast iron). In some embodiments, the amount of molten metal to be reheated and remelted in the production of a single working area - the voxel - may be in the range of 100cc, 200cc, 300cc, 500cc and more, (approximately 500- 2200 grams of grey cast iron).

### Discussion of Experimental Results: Additive Metal Casting with the Application of Additives and Inoculants

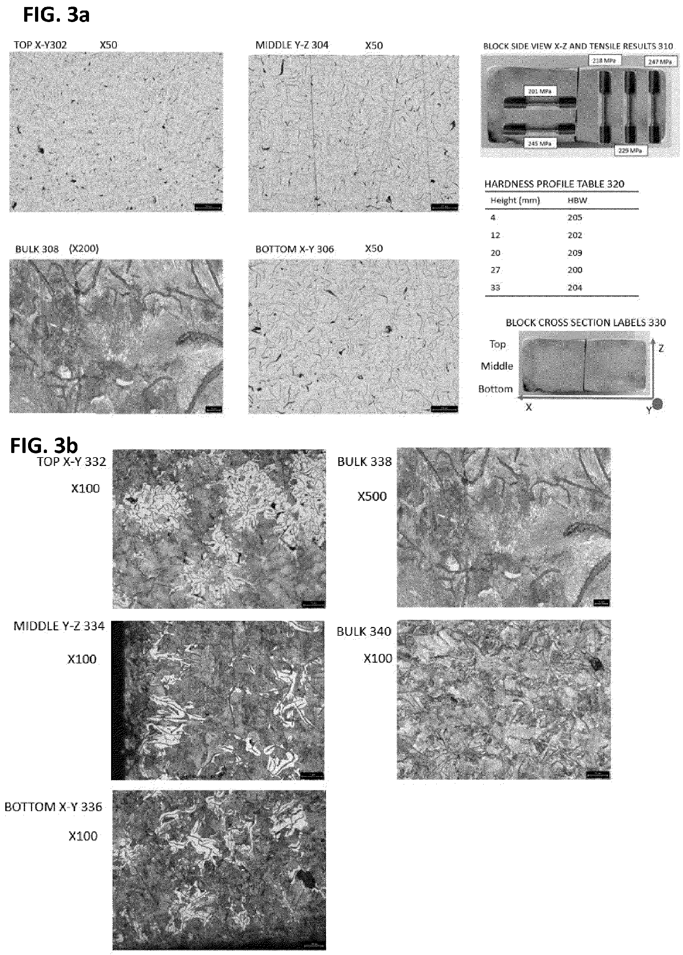

Aspects of the present disclosure will be further described with reference to **Figs. 3a-3b****,** **4a-4g** and **5a-5b,** depicting experimental results. Two experiments were conducted to demonstrate the effect of the additions of inoculants and additives on the mechanical properties, physical properties, chemical properties, and microstructure of as-casted gray cast iron produced according to embodiments of this disclosure. A third experiment was conducted to illustrate the implementation of Mg treatment on ductile iron according to the embodiments of the present disclosure.

**Experiment 1** involves casting metal test blocks and metal reference blocks of a length of 40 mm, width of 100 mm, and 40 mm height. Each part was made of 5 metal layers, each of 8mm height. **Experiment 2** involves casting metal test blocks and reference blocks of a length of 40 mm, width of 100 mm, and 88 mm height. Each part was made of 11 metal layers, each of 8mm in height. The average process temperature of the metal regions was 1320 deg. C. The velocity of the metal depositor (and the surface heaters coupled thereto) was in the range of 2.5 to 8.3 mm/sec.

The metal test blocks were cast using grey iron rods by an additive casting machine employing the aspects of the present disclosure discussed with reference to **Figs. 1a-1g** and **2a-2b** with the addition of cast property modifying powder. Various test blocks were produced with the addition of powder under a variety of test plans. The added powder was introduced using the automated powder introduction system and powder allocation method discussed with reference to **Figs. 2a-2b****.** The powder introduction system provided powder at a predefined concentration into successive melt zones during the additive casting process of the part. A set of reference blocks fabricated with no addition of cast property modifying powder was produced.

The amount of molten metal treated in the production of one production layer of the test blocks was in the range of about 30-60cc Discrete application of powder was exercised - 2-10 powder shots along a production layer. The same input metal - similar grey cast iron rods - was used for the fabrication of the reference and test blocks. The properties of the reference and test blocks were analyzed according to the ASTM E3 Standard Guide for Preparation of Metallographic Specimens.

**Figs. 3a-3b** relate to **Experiment 1** of adding inoculations and affecting the distribution of graphite in various parts of the test block and the related impact on performance. Commercially available reactive inoculation materials, effective at low amounts and having short dissolution time, were examined. Representative results are depicted in **Figs. 3a-3b****:**

Microstructure images **302, 304,** and **306,** taken at x50 enlargement from the top, middle, and bottom of the test block, respectively, and microstructure image **308** of the bulk section of the test block, taken at x200 enlargement, show a uniform distribution of graphite type A and B and a fully pearlitic, fine matrix. This is also shown in microstructure images **332, 334,** and **336,** taken at x100 enlargement from the top, middle, and bottom of the test block, respectively, and microstructure images **338** and **340** of the bulk section of the test block, taken at x500 and x100 enlargement, respectively. Block cross-section labels **330** label respective microstructure images.

Tensile measurement results **310** and hardness profile **320** reflect the microstructure results and show that enhanced mechanical properties in the bulk - hardness and tensile strength - have been received.

The results of **Experiment 1** show that the addition of inoculants according to embodiments of the present disclosure is implemented with good control of the addition rates, good agitation of the inoculant in the melt, and homogenous dissolution.

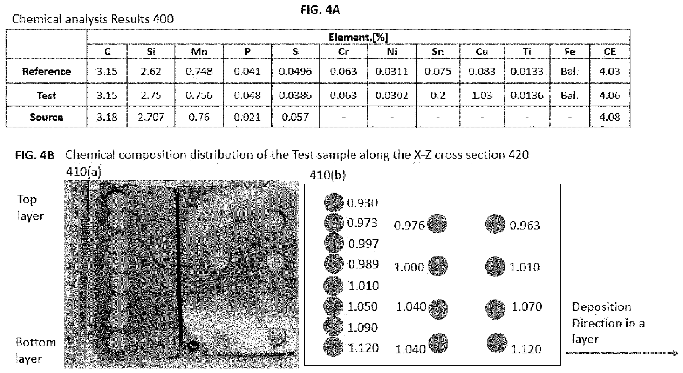

**Figs. 4a-4h** relates to **Experiment 2** of adding a Cu alloy (a Cu-based additive) and affecting the distribution of perlite within the cast. Chemical analysis, chemical composition distribution, microstructure, and mechanical properties of the test block and reference block were performed.

Table **400 (****Fig. 4a****)** depicts the chemical composition results of the comparison between the Reference, Test, and Source (input grey cast iron rod) samples. The chemical composition analysis was performed using optical emission spectrometry (OES - HITACHI Optical emission spectrometer FOUNDRY-MASTER smart), with carbon content specifically analyzed using thermal analysis.

The results reveal several key findings:
Baseline Element Consistency: The major elements (C, Si, Mn) showed a clear consistency across all samples: Carbon is maintained at 3.15-3.18 wt.%; Silicon: 2.62-2.75 wt.%; and Manganese: 0.748-0.76 wt.%. This consistency validates the process stability and confirms that the additive introduction did not alter the base composition.

Intentional Compositional Modifications: The Test sample showed significant increases in specific elements: Copper is increased from 0.083% (Reference) to 1.03% (Test), and Tin is increased from 0.075% (Reference) to 0.20% (Test). These increases directly correspond to the intentional addition of the Cu-based additive.

Other elements remained notably consistent between Reference and Test samples: Chromium is at the level of 0.063% in both samples; Nickel: 0.0311% vs 0.0302%; Titanium: 0.0133% vs 0.0136%. The Carbon Equivalent (CE) values remained stable across all samples: Source: 4.08, Reference: 4.03, Test: 4.06. This stability indicates that the additive introduction did not significantly affect the overall solidification characteristics.

**Fig. 4b** depicts the results of the chemical composition distribution analysis conducted along the X-Z cross-section of the Test sample. Multiple measurement points were systematically positioned across the sample's cross-section **410(a)** at various heights from the bottom of the sample, and Optical Emission Spectrometry (OES) measurements were taken. Analysis points were distributed to capture both vertical distribution (Z-direction) and horizontal distribution (X-direction). The Schematics of the OES analysis traces with the corresponding analyzed chemical composition (Cu%) are shown in view **410(b).**

The analysis shows consistent Cu concentration across different locations. At the bottom production layers composing the Test sample, Cu concentration is about 1.040-1.120 wt.%. In the middle of the Test sample, Cu concentration is about 1.040 wt.%. At the top production layers, Cu concentration is about 0.976-0.930 wt.%. The measurements demonstrated the near-homogeneous distribution of the additive elements along the z-direction and are consistent with (1) the addition of a fixed amount of copper at all of the melt zones at all production layers and (2) the variations in thermal cycles and mixing experienced by each of the production layers. Due to the additive nature of production, the bottom production layers experienced additional thermal cycles compared to the upper production layers. The overall mixing of copper in the molten metal of the bottom production layers is thus improved, comparing the mixing of copper in the molten metal of the upper production layers. Minimal variation was observed between different spatial locations along the x-direction. Similar results are received in measurements taken along the y-z cross-section (not shown). The results suggest that a homogeneous distribution of the additive elements across the Test block could be reached if the amount of additive provided to melt zones in a specific production layer is correlated with the height of the specific production layer (distance from the bottom).

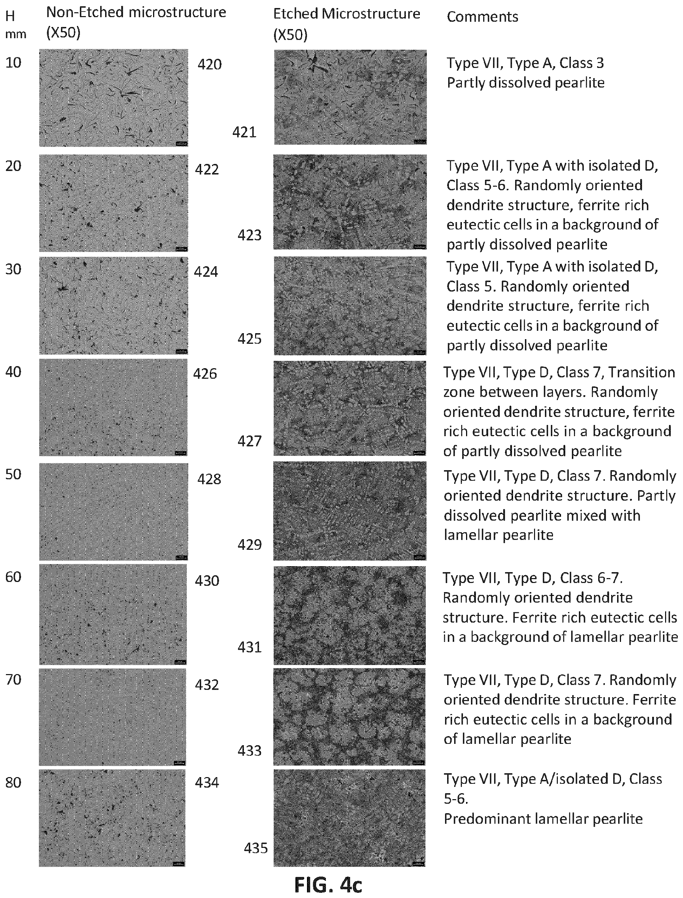

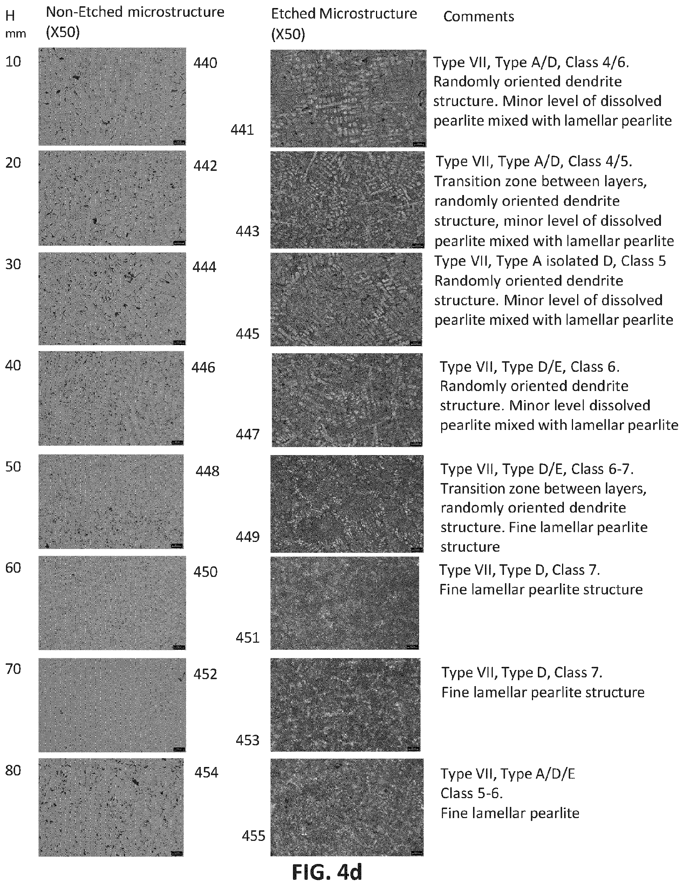

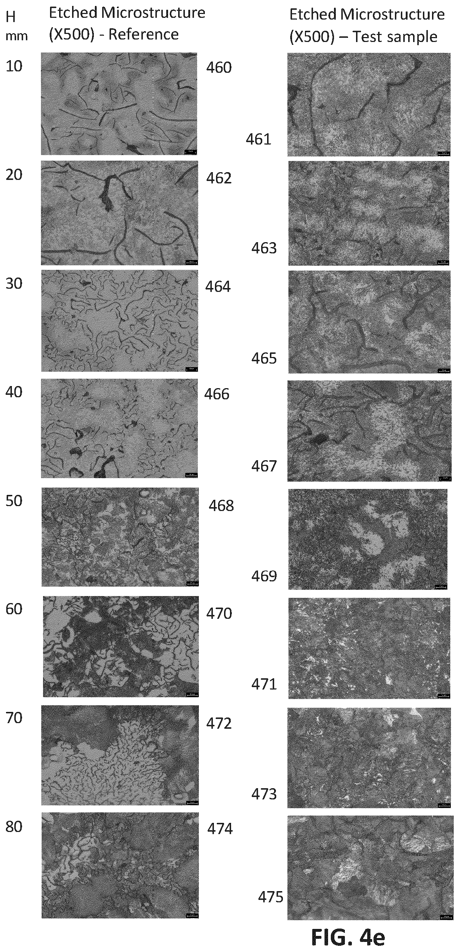

**Figs. 4c** and **4d** depict the Metallographic Examination results of the Test sample (in **Fig. 4c**) and the Reference sample (**Fig. 4d**). The metallographic examination was performed on samples sectioned vertically along the X-Z plane, prepared according to ASTM E3 standard specifications, including grinding and polishing to 1 µm surface finish. The samples were examined in both unetched and etched conditions, with etching performed using 3% Nital solution. Microstructural characterization was conducted using light microscopy at magnifications of 50X for representative field of view, 100X for graphite size assessment, and 500X for detailed matrix examination. A microstructure comparison between the Test sample and the Reference sample after chemical etching at high magnification is depicted in **Fig. 4e****.**

**Results I-II** are the main metallographic examination results that are evident in Figs. 4c-4e:

**Result** I - The microstructural characterization of the two parts showed a clear pattern of graphite distribution along the Z direction for both the Reference sample (**Fig. 4c**) and the Test sample (**Fig. 4d**):
(1) The bottom and near the bottom of the parts (0-30 mm from the build plate) exhibit Type VII graphite with predominantly Type A morphology and isolated Type D regions, with graphite size evolving from Class 3 to Class 5-6. The matrix structure in this region showed evidence of partly dissolved pearlite and ferrite-rich eutectic cells.
(2) The microstructure in the range of 40-70 mm is characterized in a fine Type D/E graphite distribution with the size of Class 5-7.
(3) The top microstructure is characterized by Type A/D/E graphite distribution with a size of Class 5-6.

The pattern of graphite distribution along the Z direction for both the Reference sample and the Test sample is predominantly attributed to the thermal cyclic nature of the additive casting technique.

**Result II** - The microstructural analysis revealed distinct differences in matrix structure between the Reference and Test samples.

In the Reference sample, examination of the bottom-to-middle region (0-40 mm from the build plate) revealed significant pearlite decomposition, characterized by randomly oriented dendritic structures and ferrite-rich eutectic cells against a background of partially dissolved pearlite. This microstructural degradation can be attributed to the cumulative effect of repeated thermal cycles and prolonged exposure to elevated temperatures inherent to the additive casting process. The middle-height region (60-70 mm from the building plate) maintained a similar randomly oriented dendritic structure with ferrite-rich eutectic cells, though notably transitioning to a background of lamellar pearlite structure. The top region (approximately 80 mm from the building plate) exhibited a fully lamellar pearlite structure.

In contrast, the Test sample, processed with Cu-based additive, demonstrated significantly enhanced microstructural stability and refinement. The addition of the Cu-based additive resulted in three primary microstructural modifications: (i) substantial reduction in pearlite dissolution, (ii) refined interlamellar spacing within the pearlite structure, and (iii) increased pearlite-to-ferrite ratio, effectively eliminating the formation of ferrite-rich eutectic cells observed in the Reference sample. The bottom-to-middle region (0-40 mm from the build plate) exhibited only minimal pearlite dissolution, with the matrix predominantly comprising lamellar pearlite. The middle-to-top region (40 mm to top surface) was characterized by a consistent fine lamellar pearlite structure, demonstrating superior microstructural stability throughout the building height.

The distinct differences in matrix structure between the Reference and Test samples revealed in the microstructural analysis show that the addition of the Cu-based additive according to embodiments of the present disclosure recreated the effect of Cu on cast microstructure as expected in traditional casting.

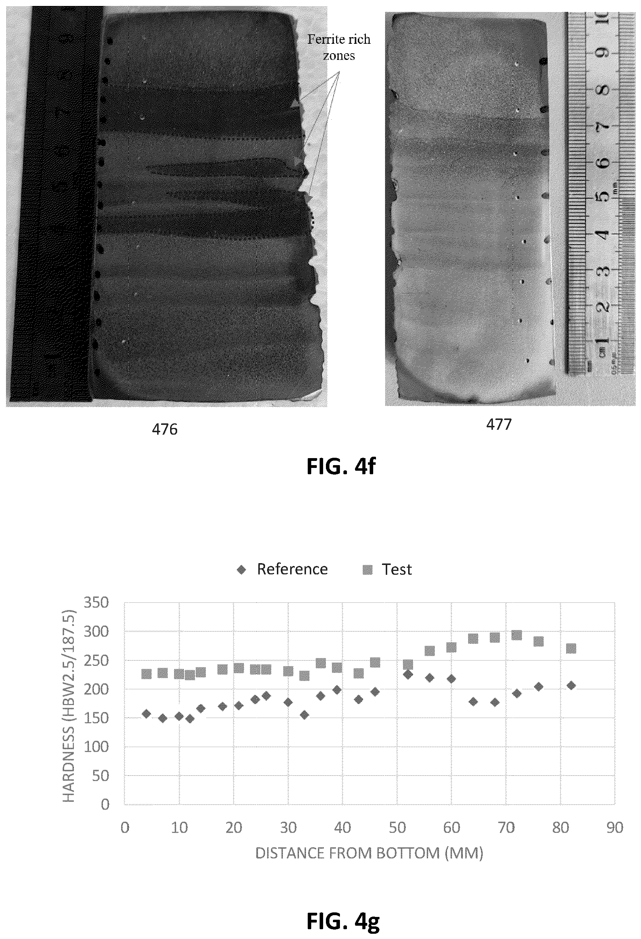

**Fig. 4f** shows macro images after chemical etching of the Reference sample (image **476**) and the test sample (image **477**).
(1) The macrostructure observation shows good metallurgical bonding between all metal layers produced by the additive casting techniques of the present disclosure. Both samples exhibited sound metallurgical bonding between successive layers with no observable casting defects such as cracks, lack of fusion, shrinkage, or porosity. The sound metallurgical bonding between successive layers received for both the Test and Reference samples is indicative of the repeatability of the additive casting process during the intra-layer metal processing (X-Y plane: one working area after another within the same production layer) and inter-layer metal processing (Z-direction: one production layer on top of the other).
(2) The macrostructure observation further shows ferrite-rich zones that were observed in the reference sample etched cross-section. This is also evident from the X50 enlargement images depicted in **Fig. 4c****.** The addition of Cu alloy during the manufacturing of the test sample eliminated the formation of ferrite-rich eutectic cells. This is also evident from the X50 enlargement images depicted in **Fig. 4d** and the X500 enlargement images depicted in **Fig. 4e****.**

**Fig. 4g** depicts Brinel hardness measurement results as a function of the distance from the bottom of the sample for the reference and test samples. Hardness measurements were conducted using the Brinell hardness test method, performed in accordance with ASTM E10 standard using a SUN TEC Brinell hardness machine Model DLC-3100. The testing parameters utilized a 2.5 mm indenter with a 187.5 Kgf load (HBW2.5/187.5), selected due to sample width constraints that precluded the standard 3000 Kgf load specified in ASTM E10.

**Result III** - The hardness measurements revealed a significant enhancement in hardness properties through the addition of the Cu-based additive. The Reference sample exhibited an average hardness value of 183 ± 22 HBW, while the Test sample demonstrated substantially higher hardness values, averaging 247 ± 23 HBW. This represents an approximate 35% increase in hardness through the addition of the Cu-based additive.

**Result IV** - The hardness distribution along the build direction (Z-axis) exhibited characteristic patterns:
(1) The reference Sample shows notable variability throughout the building height: Lower region (0-20 mm): relatively consistent hardness values ranging from 148-170 HBW. Middle region (20-50 mm): fluctuating values between 170-225 HBW. Upper region (50-82 mm): varying between 175-220 HBW.
(2) The Test Sample shows a more consistent hardness profile with an increasing trend toward the top surface: Lower region (0-20 mm): stable values around 220-230 HBW. Middle region (20-50 mm): increasing trend from 230 to 245 HBW. Upper region (50-82 mm): highest values reaching 270-290 HBW

The enhanced hardness properties in the Test sample can be attributed to several microstructural factors: (i) Increased pearlite-to-ferrite ratio in the matrix; (ii) Reduced pearlite decomposition; (iii) Refined lamellar pearlite structure; and (iv) Modified graphite distribution and size classification.

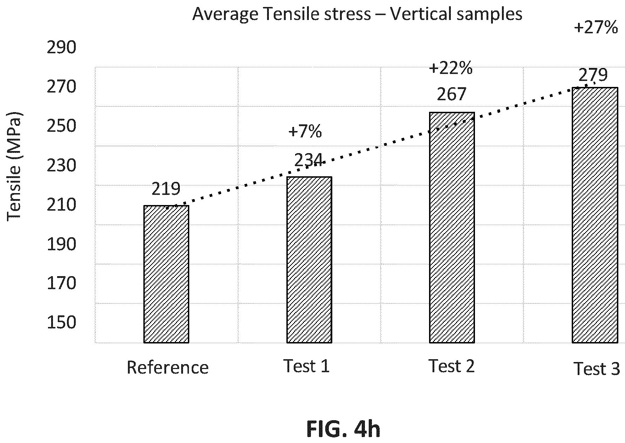

**Fig. 4h** depicts tensile measurement results of four cast samples: a reference sample with no CU addition and three test samples: Test 1 - with a target Cu alloy addition of 0.5%; Test 2-0.75% and Test 3 - 1%. The tensile testing was carried out on round vertical samples with ø 4 mm reduced section and section length of 64 mm on seven extraction locations. The tensile test was performed using the SHIMADZU Tensile machine model AGS-100kNX and in accordance with ASTM E8. The tensile measurement results obtained at three Cu addition levels are consistent with the expected gradual enhancement of the mechanical properties in response to gradual Cu addition.

The average tensile stress values (MPa) for the vertical samples of the reference and Test 1 to Test 3 samples are shown. The results show an increase of the average tensile stress in the respective vertical samples proportionally to the amount of Cu added. The tensile strength of Test 1 is higher by 7% with respect to the tensile strength of the reference; the tensile strength of Test 2 is higher by 22% and test 3 - by 27%. These

The results shown in **Figs. 4a-4h** demonstrate that the addition of the Cu alloy to the molten metal during processing, according to the present disclosure, produces multiple beneficial effects. First, it significantly increases the overall hardness. Second, it promotes more consistent mechanical properties throughout the building height, as evidenced by the hardness profile. Third, microstructural analysis reveals that the addition of nominal 1% Cu through Cu alloy substantially reduces pearlite decomposition, refines the interlamellar spacing of the pearlite structure, and increases the pearlite-to-ferrite ratio throughout the building height. These improvements were achieved through the introduction of a fixed concentration of Cu-based additive during the additive casting process, resulting in a homogeneous distribution of the additive elements, as confirmed by chemical analysis. The enhanced microstructural stability and refined pearlite structure were observed across all production layers, demonstrating good control of the addition rates.

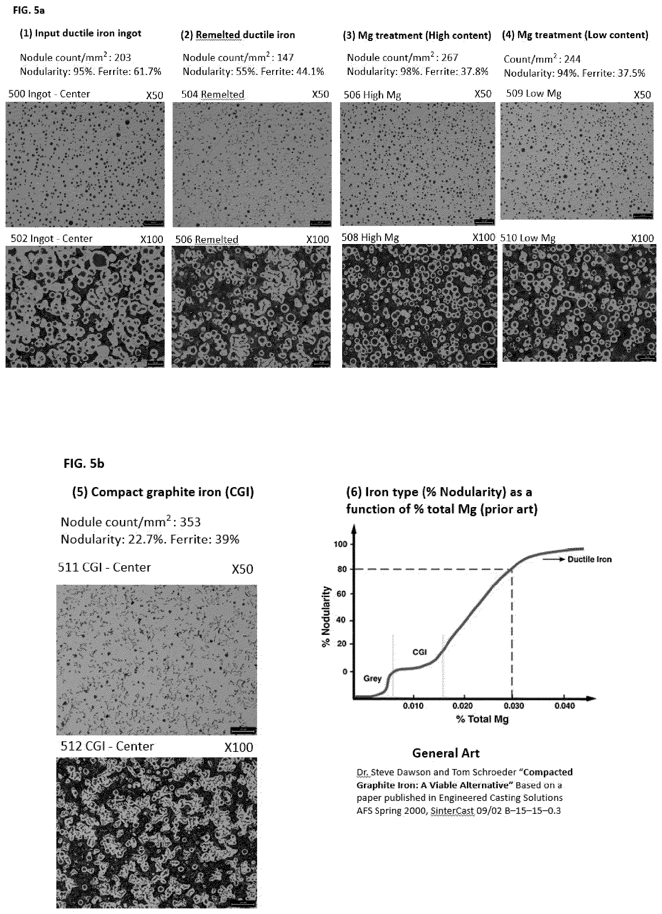

**Figs. 5a-5b** refer to **Experiment 3,** which deals with ductile iron. Ductile iron is characterized by graphite in the form of nodules rather than flakes, as in grey iron. Nodule formation is achieved by adding nodulizing elements, most commonly Mg (magnesium). Mg boils at 1100 °C.

In **Experiment 3,** ductile iron ingots were used as input for five experimental steps. In the first step of **Experiment 3,** the properties and microstructure of the input ductile iron were measured, and the results are shown in the result set **(1).**

In the second step of **Experiment 3,** the **input** ductile iron ingots were heated - scanned by a surface heater (e.g., surface melter **104** shown in **Fig. 1a****)** according to embodiments of the present disclosure. The effect of remelting on the microstructure and properties of the input ductile iron is shown in the result set **(2).** The morphological change of the graphite, mainly due to Mg fading, oxidation, and sulfur reaction, is evident. The nodularity is decreased from 95% to 55%. The remelted ductile iron input serves as a reference in the third and fourth steps of **Experiment 3.**

In the third step of **Experiment 3,** the input ductile iron ingots were heated - scanned by a surface heater, and additive alloy with high Mg concentration was provided according to the embodiments of the present disclosure. The effect of heat and high-Mg additive treatment on the microstructure and properties of the input ductile iron is shown in the result set **(3).** The nodularity is increased with respect to the reference (result set **(2))** and is maintained, with a slight increase, with respect to the input ductile iron (result set **(1)).**

In the fourth step of **Experiment 3,** the input ductile iron ingots were heated - scanned by a surface heater, and additive alloy with low Mg concentration was provided according to the embodiments of the present disclosure. The same surface heating conditions, as in the third step, were applied in the fourth step. The effect of heat and low-Mg additive treatment on the microstructure and properties of the input ductile iron is shown in the result set **(4).** The nodularity is increased with respect to the reference (result set **(2))** and is maintained, with a slight decrease, with respect to the input ductile iron (result set **(1)).**

In the fifth step of **Experiment 3,** the input ductile iron ingots were heated - scanned by a surface heater, and additive alloy with high Mg concentration was provided according to the embodiments of the present disclosure. In comparison to the third and fourth steps, different surface heating conditions were applied. The effect of heat and high-Mg additive treatment on the microstructure and properties of the input ductile iron is shown in the result set **(5).** The microstructure and properties of compacted graphite iron are exhibited.

**Experiment 3** shows that the application of material treatment techniques and operation control according to embodiments of the present disclosure, recreated expected theoretical and experimental results of the general art, e.g., as depicted in graph **(6)** of **Fig. 5b** (taken from: Dr. Steve Dawson and Tom Schroeder "Compacted Graphite Iron: A Viable Alternative" Based on a paper published in Engineered Casting Solutions AFS Spring 2000, SinterCast 09/02 B-15-15-0.3).

**Experiments 1, 2** and **3** demonstrate the repeatability nature of additive casting with the addition of additives and/or inoculations according to embodiments of the present disclosure. **Experiments 1, 2** and **3** further demonstrate the ability to control and impact cast microstructure and properties by controlling the operational parameters of the casting system and processing molten metal in a voxelated manner.

Embodiments of the invention were described with respect to the additive casting of gray iron. The invention is not limited by the type of cast material. The invention is applicable for the additive casting of iron alloys and other metals, including ductile iron, steel, and other metals, with the appropriate modifications.

For clarity, in **Fig. 1a****,** units **126, 124, 120,** and **122,** and motion system **134** are shown as single and separate, but the present disclosure is not limited by the types and number of operational units for each type.

For example, in some embodiments, where more than a single molten metal material is used, multiple molten metal depositors are provided. In other embodiments, where more than a single mold material is used, multiple mold constructors are provided.

Depending on the geometry of the object regions and the build plan, the volume of molten metal in the melt zones of the various working areas may not be identical. Consequently, the amount of inoculants and/or additives delivered into a specific working area may not be identical to the amount of inoculants and/or additives delivered into other working areas.

In the example of **Figs. 1a****,** **1c****,** **2a-2b**, powder nozzle **218** (element **184** shown also in **Fig. 1c****)** is realized as a linear tube, but this is not necessarily so. Other nozzle arrangements may be used, such as a coaxial nozzle arrangement.

In the example of **Figs. 1c****,** **2a-2b****,** powder nozzle **184** is shown as having a fixed powder delivery angle and a fixed standoff distance, but this is not necessarily so. In some embodiments, the powder delivery angle and/or the standoff distance may be controlled and adjusted according to the build plan (not shown in Fig. 1c).

A pressurized application is illustrated in **Figs. 1c****,** **2a-2b****;** however, other release techniques can be used, such as powder puffing.

In some embodiments, powder is continuously provided to each and every working area. In some embodiments, the provision of powder is done in a noncontinuous, discrete manner in selected working areas. In one embodiment, a single powder shot is provided at the release location. In other embodiments, multiple pulsed powder shots are delivered at the release location. The amount of powder in a shot - being a single shot or one of multiple shots, may be adjusted accordingly. The noncontinuous, discrete powder discharge facilitates tighter control over the powder amount provided.

The total production throughput may be increased by operating more than a single build table, more than one depositor per build table, more than one mold construction unit per build table, and the like. In some embodiments, several units of the same type simultaneously operate in different positions relative to build table **116** for handling different areas of the cast-in-progress. Other such configurations are possible, particularly in the case where there are multiple instances of build table **116.**

For ease of explanation and for illustration, under **Experiment 2** described herein, the processing plan for the entire cast - in the shape of a box - involved substantially the same processing to all of the production layers and substantially similar processing to all of the working areas in a production layer. Thus, the same amount of powder was introduced to the melt zones in the working areas. It is noted that embodiments of the present disclosure are not limited to this example build plan, and other build plans can be implemented, including complex geometries, functions, and applications.

Aspects of the present disclosure were described with reference to the casting of a complete part. The additive casting technique described herein is suitable for hybrid casting applications. In hybrid casting, a portion of the final cast is built on top of a portion of the final part that was manufactured by traditional casting techniques. Compared to, e.g., SLM (Selective Laser Melting) and DED (direct energy deposition), which were investigated for hybrid casting, molten metal additive casting as described herein may better suit hybrid casting applications.

Aspects of the present disclosure were described with reference to the casting of ferrous alloys, with cooling rates of no more than 2°C/s (or 100k/s), and minimum duration of at least 1 second - however this is not necessarily so. In some embodiments, for example, applications involving white cast iron, faster cooling rates and shorter minimum durations are applicable.

Embodiments of the present disclosure facilitate treating voxels of 1cc, 2cc, 5cc, 10c, and up to 100 cc of molten metal with iterative addition of inoculants and/or additives in a locally controlled and highly repeatable manner at the production layer level and at the working areas level. According to embodiments of this disclosure, locally controlled and highly-repeatable addition of inoculants and additives allows for enhancing, with appropriate inoculants and additives, the microstructure, mechanical properties and physical properties of the cast; design and manufacturing cast with specific microstructure and mechanical properties in specific locations within the cast; by magnesium treatment, produce ductile iron casts or ductile iron locations within grey iron cast; by carbide promoters treatment, produce white iron casts or white iron locations within the grey iron cast.

As described herein, an additive process according to embodiments of the present disclosure employing voxelated heat treatment - melting and remelting, ensures that the sequentially deposited object regions of the cast metal adhere to metal metallurgical, mechanical, and compositional requirements.

Thus, according to an aspect of the present disclosure, there is provided an additive metal casting system for casting a metallic object by producing a stack of production layers having mold regions and object regions, the mold regions constituting a mold-in-progress and the object regions constituting a cast-in-progress held within the mold-in-progress, the additive metal casting system comprising a metal processing system comprising: a surface melter configured for melting a first volume of previously-solidified metal in the cast-in-progress; a metal depositor configured for dropping a second volume of molten metal into said first volume; wherein said first volume and said second volume accumulate into a melt zone of at least a minimum volume of molten material required for at least one cast-property modification process, and an inert environment unit, wherein at least sections of at least said depositor and surface melter in proximity to said melt zone and said free-fall molten metal are maintained under inert environment.

According to another aspect of the present disclosure, there is provided an additive metal casting method for producing a metallic object by generating a stack of production layers having mold regions and object regions, the mold regions constituting a mold-in-progress and the object regions constituting a cast-in-progress withheld in the mold-in-progress, the method comprising, for each production layer: iteratively constructing a mold region of a current production layer on top of said stack of production layers; and processing an object region of the current production layer, wherein processing the object region of the current production layer comprises melting a first volume of previously-solidified metal in the cast-in-progress and dropping a second volume of molten metal into the first volume, wherein said first volume and said second volume accumulate into a melt zone of at least a minimum volume of molten material required for cast-property modification processes; and maintaining the melt zone under inert environment while in the melt state.

Embodiments of the present disclosure receive metal rods as input (other solid input forms are suitable, e.g., ingot, pebbles, and more, as well as liquid input, e.g., by incorporating a crucible).

Additional aspects of systems and methods for additive casting are described, for example, in PCT Patent Publications WO2019/053712A1 filed Sept. 6, 2018, WO2022/243921A1 filed May 19, 2022, and WO2023/002468A1 filed May 15, 2022, commonly owned by Applicant and incorporated herein by reference.

Unless specifically stated otherwise, as apparent from the preceding discussions, it is appreciated that, throughout the specification, discussions utilizing terms such as "processing," "computing," "calculating," "determining," or the like refer to the action and/or processes of a general-purpose computer of any type, such as a client/server system, mobile computing devices, smart appliances, cloud computing units or similar electronic computing devices that manipulate and/or transform data within the computing system's registers and/or memories into other data within the computing system's memories, registers or other such information storage, transmission or display devices.

Embodiments of the present disclosure may include apparatus for performing the operations herein. This apparatus may be specially constructed for the desired purposes, or it may comprise a computing device or system typically having at least one processor and at least one memory, selectively activated or reconfigured by a computer program stored in the computer. The resultant apparatus, when instructed by software, may turn the general-purpose computer into inventive elements as discussed herein. The instructions may define the inventive device in operation with the computer platform for which it is desired. Such a computer program may be stored in a computer readable storage medium, such as, but not limited to, any type of disk, including optical disks, magnetic-optical disks, read-only memories (ROMs), volatile and non-volatile memories, random access memories (RAMs), electrically programmable read-only memories (EPROMs), electrically erasable and programmable read-only memories (EEPROMs), magnetic or optical cards, Flash memory, disk-on-key or any other type of media suitable for storing electronic instructions and capable of being coupled to a computer system bus. The computer readable storage medium may also be implemented in cloud storage.

Some general-purpose computers may comprise at least one communication element to enable communication with a data network and/or a mobile communications network.

The processes and displays presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems will appear from the description below. In addition, embodiments of the present disclosure are not described with reference to any particular programming language. It will be appreciated that a variety of programming languages may be used to implement the teachings of the present disclosure as described herein.

While certain features of the present disclosure have been illustrated and described herein, many modifications, substitutions, changes, and equivalents will now occur to those of ordinary skill in the art. It is, therefore, to be understood that the appended claims are intended to cover all such modifications and changes as fall within the true spirit of the present disclosure.

## Claims

1. An additive metal casting system for casting a metallic object by producing a stack of production layers having mold regions and object regions, the mold regions constituting a mold-in-progress and the object regions constituting a cast-in-progress held within the mold-in-progress, the additive metal casting system comprising a metal processing system comprising:
a surface melter configured for melting a first volume of previously-solidified metal in the cast-in-progress;
a metal depositor configured for dropping a second volume of molten metal into said first volume;
wherein said first volume and said second volume accumulate into a melt zone of at least a minimum volume of molten material required for at least one cast-property modification process; and
a powder introduction unit for delivering an allocated amount of at least one cast-property modifying powder into said melt zone.

2. The additive metal casting system according to claim 1 wherein the powder introduction unit comprises a doser for dosing one or more doses of said at least one cast-property modifying powder, said doser comprises:
- a powder reservoir for containing said cast-property modifying powder;
- a dosing mechanism configured to release a predetermined powder amount from the powder reservoir;
- a control volume for collecting the released powder amount prior to delivery into the melt zone; and
- a delivery system.

3. The additive metal casting system according to claim 1 or 2 further comprising a controller operatively connected to the molten metal depositor, the surface melter and the powder introduction unit, the controller configured to:
coordinate said molten metal depositor, the surface melter and the powder introduction unit to maintain said melt zone of a predetermined minimum volume in a molten state for at least a minimum duration sufficient for said allocated amount to cause a desired cast property modification process in said minimum volume of molten material.

4. The additive metal casting system of claim 3 wherein the controller is further to coordinate said depositor and said surface melter to drop molten metal into the melt zone while maintaining, upon drop release, the molten metal drops and the melt zone within a predetermined temperature differential not exceeding 100 degrees C.

5. The additive metal casting system according to claim 3 wherein the controller is further operatively connected with a mold constructor, the controller is further configured to control the mold constructor to construct the mold in progress, the controller is further to coordinate the mold constructor to construct a current mold region of a current production layer on top of said cast-in-progress before processing a current object region of the current production layer.

6. The additive metal casting system of any of claims 1 to 5 further comprising an inert environment unit, and wherein at least sections of at least said depositor, surface melter and powder introduction unit in proximity to said melt zone and said free-fall molten metal are maintained under inert environment.

7. The additive metal casting system of any of claims 1 to 5 further comprising an inert environment unit, and wherein said depositor, surface melter, powder introduction unit and inert environment unit are physically coupled and arranged as an integrated processing assembly movable across an upper surface of the cast-in-progress.

8. The additive metal casting system of claim 7 wherein said depositor comprises a metal rod rotatable around a provision axis of said integrated processing assembly and liftable up and down the provision axis; said surface melter comprises an induction heating unit having a coil shaped as a planar closed shape with an opening positioned concentrally to the provision axis; said inert environment unit is arranged on a periphery of said induction heating unit; and said power introduction unit has a feeding nozzle placed in proximity to the depositor, wherein molten metal free-falling from said depositor and the cast property modifying powder are provided to the melt zone through said opening.

9. The additive metal casting system of any of claims 3 to 8 further comprising a motion unit and wherein the controller is further to control the motion unit to provide relative movement of at least the depositor, the surface melter and the powder introduction unit across an upper surface of the cast-in-progress.

10. The additive metal casting system of any of claims 1 to 9 wherein said surface melter is further configured to provide heat to said melt zone after said first volume and said second volume are accumulated to thereby (1) maintain said melt zone in a melt state for a predefined duration and/or impact a cooling rate of said melt zone from its melting temperature.

11. The additive metal casting system of any of claims 1 to 10, wherein the allocated amount of said at least one cast property modifying powder is adjusted based on a predetermined fading rate of the cast property modifying powder during remelting.

12. An additive metal casting method for producing a metallic object by generating a stack of production layers having mold regions and object regions, the mold regions constituting a mold-in-progress and the object regions constituting a cast-in-progress withheld in the mold-in-progress, the method comprising, for each production layer:
iteratively constructing a mold region of a current production layer on top of said stack of production layers; and
processing an object region of the current production layer,
wherein processing the object region of the current production layer comprises
- melting a first volume of previously-solidified metal in the cast-in-progress and dropping a second volume of molten metal into the first volume, wherein said first volume and said second volume accumulate into a melt zone of at least a minimum volume of molten material required for cast-property modification processes; and
- providing an allocated amount of at least one cast-property modifying powder to the melt zone; and
- maintaining the melt zone under inert environment while in the melt state.

13. The additive metal casting method of claim 12 wherein said cast property modifying powder comprises a chemically-modifying material and/or a metallurgically-modifying material.

14. The additive metal casting method of claim 12 wherein said cast property modification processes comprise at least one of: (1) controlled graphite nucleation and growth achieving a predetermined graphite morphology and/or distribution; (2) controlled phase transformation producing a predetermined ratio of phases; (3) in-situ chemical composition modification achieving predetermined local material properties; (4) Grain refinement producing enhanced mechanical properties; (5) precipitation hardening; or (6) controlled solidification process producing predetermined dendrite arm spacing.

15. The additive metal casting method of claim 12 and also comprising controlling said cast property-modification processes by one or more of (1) maintaining the minimum volume at a predetermined temperature within a specified range for a predetermined dwell time; (2) maintaining predetermined temperature gradients across the minimum volume.

16. The additive metal casting method of claim 12 wherein said molten metal is cast iron alloy and wherein said at least one powder material is selected from (1) a group of grain refiners consisting of Titanium-based alloy, Zirconium-based alloy, Niobium-based alloy and/or (2) a group of inoculants consisting of Ferrosilicon-based inoculants, aluminum-based inoculants, Silicone carbide-based inoculants, Calcium-based inoculants, Strontium-based inoculant, Cerium-based inoculants, Sodium-based inoculants, Barium-based inoculants, Rare earth elements and/or (3) a group of Deoxidizers consisting of Aluminum, Silicon, Manganese, Calcium and/or (4) a group of Microstructure modifiers consisting of Magnesium, Cerium, Lanthanum, Yttrium and/or (5) a group of Carbide formers consisting of Vanadium, Titanium, Tellerium, Tungsten, Molybdenum.

17. The additive metal casting method of claim 12 wherein said molten metal is steel and/or steel alloy and wherein said at least one powder material is selected from (1) a group of grain refiners consisting of Aluminum-based alloy, Titanium-based alloy, Zirconium-based alloy, Niobium-based alloy and/or (2) a group of Deoxidizers consisting of Aluminum, Silicon, Manganese, Calcium and/or (3) a group of Microstructure modifiers consisting of Magnesium, Cerium, Lanthanum, Yttrium and/or (4) a group of Carbide formers consisting of Vanadium, Titanium, Tungsten, Molybdenum, Niobium and/or (5) a corrosion resistance modifiers consisting Chromium, Nickel, Molybdenum, Silicon, Aluminum, Titanium, Niobium, Phosphorus.

18. The additive metal casting method of any of claims 13 to 17 and also comprising maintaining the melt zone under a melt state for a predetermined minimum duration, wherein said predetermined minimum duration is sufficient for said allocated amount to cause a desired cast property modification process in said minimum volume of molten material.

19. The additive metal casting method of claim 18 wherein said predetermined minimum duration is sufficient to enable complete dissolution and homogenization of said allocated amount of the cast property modifying material in the melt zone.

20. The additive metal casting method of any of claims 13 to 19 and also comprising adjusting the allocated amount of said cast property modifying material based on a predetermined fading rate of the cast property modifying powder during remelting.
